# FASCICULE DE BREVET EUROPEEN

(11) **EP 2 362 467 B1**
(45) Date de publication et mention de la délivrance du brevet: **06.05.2020**
(21) Numéro de dépôt: 10180996.0
(22) Date de dépôt: 21.09.2001
(51) Int. Cl.: H01M 4/58, C01B 25/37, C01B 33/20, H01M 4/62, C01B 17/96, H01M 4/36, H01M 4/136, C01B 25/45, H01G 9/00, H01M 4/485, H01M 4/525, H01M 10/0525, H01M 10/052

(54) **Procédé de synthèse de matériaux rédox enrobés de carbone à taille contrôlée**
Syntheseverfahren von mit kohlenstoff beschichteten redoxmaterialteilchen mit kontrollierter teilchengrösse
Synthesis process of redox materials coated with carbon having a controlled size

(30) Priorité: 26.09.2000 CA 2320661
(43) Date de publication de la demande: 31.08.2011
(62) Demande divisionnaire de: 01973906.9
(73) Titulaire: HYDRO-QUEBEC, Montréal, Québec H2Z 1A4 (CA); UNIVERSITE DE MONTREAL, Montréal, Québec H3T 1J4 (CA); Centre National de la Recherche Scientifique, 75016 Paris (FR)
(72) Inventeur: Armand, Michel, 75014 Paris (FR); Gauthier, Michel, La Prairie Québec J5R 1E6 (CA); Magnan, Jean-François, Neuville Québec G0R 2R0 (CA); Ravet, Nathalie, Montreal Québec H2L 4A5 (CA)
(74) Mandataire: Berger, Axel Bernhard

(56) Documents cités:
- EP-A- 1 049 182
- EP-A- 1 094 532
- CA-A1- 2 307 119

## Description

### DOMAINE DE L'INVENTION

La présente invention concerne une méthode de préparation de matériaux d'électrode capables de permettre des réactions rédox par échange d'ions alcalins et d'électrons. Les applications sont dans le domaine des générateurs électrochimiques (batteries) primaires ou secondaires, des générateurs de type supercapacités et dans le domaine des systèmes de modulation, de la lumière de type électrochrome.

### ART ANTÉRIEUR

Les composés d'insertion de formule LiMPO₄ de structure olivine où M est un cation métallique appartenant à la première ligne des métaux de transition par exemple Mn, Fe, Co ou Ni, sont connus et leur utilisation comme matériau de cathode dans les batteries au lithium a été rapporté par Goodenough et al. dans le brevet US-A-5.910.382. Dans la demande canadiennne CA-A-2.307.119, la généralité des composés "de type LiMPO₄ " a été précisée dans la mesure où tout en gardant sensiblement la même structure olivine, une partie des atomes M peut être substituée par d'autres métaux de valence comprise entre 2 et 3, dont les éléments de transition voisins ou une partie du phosphore, peut être substitué par des éléments tels que Si, S, Al, As. De même, le lithium permettant l'électroneutralité peut occuper une fraction ou la totalité des sites octaédriques de la structure olivine, ou éventuellement se placer en position interstitielle lorsque la totalité des sites octaédriques est occupée.

La formule Li_{x+y}M_{1-(y+d+t+q+r)}D_{d}TₜQ_{q}Rᵣ[PO₄]ₗ₋₍ₚ₊ₛ₊ᵥ₎[SO₄]ₚ[SiO₄]ₛ[VO₄] dans laquelle :
- M peut être Fe²⁺ ou Mn²⁺ ou un mélange des deux;
- D peut être un métal dans l'état d'oxydation +2 choisi dans le groupe contenant Mg²⁺, Ni²⁺, Co²⁺, Zn2+, Cu²⁺ et Ti²⁺;
- T peut est un métal dans l'état d'oxydation +3 choisi dans le groupe contenant Al³⁺, Ti³⁺, Cr³⁺, Fe³⁺, Mn³⁺, Ga³⁺ et V³⁺;
- Q est un métal dans le degré d'oxydation +4 choisi dans le groupe contenant Ti⁴⁺, Ge⁴⁺, Sn⁴⁺ et V⁴⁺; et
- R est un métal dans l'état d'oxydation +5 choisi dans le groupe contenant V⁵⁺, Nb⁵⁺ et Ta⁵⁺,
avec une définition des paramètres x, y, d, t, q, r, p, s et englobe la généralité du sens à donner au terme "de type LiₓMXO₄, 0 ≤x ≤2 " de structure olivine au sens de la présente invention et sera utilisée dans ce qui suit. Les substituents préférés du phosphore sont le silicium et le soufre.

Dans ces composés préparés sous forme lithiés (à l'état déchargé), au moins un des métaux de transition est à l'état d'oxydation II. Dans le brevet US-A-5.910.382 et sa CIP) ainsi que dans les brevets et publications suivants, les synthèses des composés LiMPO₄ sont toutes réalisées à partir d'un sel du métal de transition M correspondant au degré d'oxydation II et en conservant cet état d'oxydation tout au long de la synthèse jusqu'au produit final. L'élément de transition dont on maintient la valence II tout au cours de la synthèse, quelle que soit la voie suivie, est le fer dont la plupart des composés s'oxydent spontanément. À l'air par exemple, LiFePO₄ a été réalisé par réaction à l'état solide, à haute température et sous atmosphère inerte des divers constituants (par exemple pour la source de fer, Fe(OOCCH₃)₂, la source de phosphate, NH₄H₂PO₄ et celle de lithium, Li₂CO₃). Dans tous les cas, la source de fer est un sel dans lequel le fer est à l'état d'oxydation II, que ce soit à partir d'acétate de fer II comme décrit dans le brevet US-A-5.910.382, d'oxalate de fer II comme décrit dans Electrochem and Solid-State Letters, 3, 66 (2000) et dans Proc. 10th IMLB, Como, Italy, May (2000) ou de vivianite (Fe₃(PO₄)₂ 8H₂O) comme décrit dans la demande canadienne de brevet CA-A-2.270.771. La sensibilité du fer II vis-à-vis de l'oxydation par l'oxygène rend tous ces processus de synthèse très délicats et toutes les précautions doivent être prises pour supprimer totalement la présence d'oxygène et notamment lors du traitement thermique, ce qui augmente le coût du matériau correspondant. Cette sensibilité donne lieu a une irreproductibilité du comportement électrochimique des échantillons. Ce problème est souligné dans Yamada et al. J. Electrochem Soc., 148, A224 (2001). Par ailleurs, le fer est l'élément le plus utile, de par son abondance et absence de toxicité, et la principale mise en oeuvre de l'invention est destinée à une préparation améliorée de composés rédox contenant cet élément. Il est évident que les résultats de l'invention s'appliquent au manganèse, au vanadium, au cobalt, au titane, au vanadium etc. dans des conditions correspondantes à leur degré d'oxydation voulu. D'une manière générale, tout précurseur du métal M dont le degré d'oxydation le moins coûteux est le plus facile à manipuler ne correspond pas à celui requis dans la formule du matériau rédox LiₓMXO₄.

Une amélioration de ces composés a précédemment été proposée dans le brevet CA-A-2.270.771 correspondant à EP-1049182). Dans ce document, il a été montré que les performances électrochimiques de LiFePO₄ étaient grandement améliorées que ce soit en terme de capacité réversible, de cyclabilité ou de puissance, lorsque les particules du matériau sont recouvertes d'une fine couche de carbone conducteur électronique. Dans cette demande, les inventeurs ont mis à profit le fait d'utiliser un sel de fer à l'état d'oxydation II, en présence d'un composé organique susceptible d'être pyrolysé, dans les conditions de la synthèse, sans toutefois que le résidu de carbone ne puisse être oxydé à cause du faible pouvoir oxydant du composé ferreux ou de l'atmosphère en équilibre avec ce dernier.

La demande de brevet EP-A-1.094.532 décrit une méthode pour la production de matériaux pour une électrode positive active. Cette méthode inclut une étape de mélange d'une pluralité de substances pour obtenir un précurseur. Puis le précurseur est fritté pour aboutir à la synthèse d'un composé de formule Lix M_{y}PO₄ dans lequel x est supérieur à 0 et inférieur ou égal à 2, y est supérieur ou égal à 0,8 et inférieur ou égal à 1,2 et M inclut au moins un métal ayant des orbitales 3d. Un agent réducteur solide est ajouté au cours de l'étape de mélange audit précurseur afin de permettre la préparation, qui s'effectue sous atmosphère inerte, de matériau pour électrodes positives actives capables de doper et de dédoper de façon satisfaisante et réversible le lithium.

EP-A-1.094.533 décrit un électrolyte non-aqueux adapté pour les batteries secondaires utilisant un matériau ou une électrode active contenant un composé représenté par la formule générale LiₓM_{y}PO₄, dans laquelle x est supérieur à 0 et inférieur ou égal à 2, et y est supérieur ou égal à 0,8 et inférieur ou égal à 1,2, avec M contenant un état de transition 3d, la taille des grains de LiₓM_{y}PO₄ n'est pas supérieure à 10 micromètres. Cet électrolyte non aqueux pour batteries secondaires est présenté comme possédant des caractéristiques cycliques améliorées et une haute de capacité.

La demande internationale PCT référencée WO 01/53198 décrit un matériau, à base de composé mixte lithium métal, qui libère par interaction électrochimique des ions lithium. Ce matériau est préparé à partir des précurseurs nécessaires par réduction d'au moins un des ions métalliques par du carbone

Outre leur performance électrochimique dans les accumulateurs au lithium, l'intérêt de cette nouvelle famille de matériaux est de mettre en jeu des éléments non-toxiques, abondants et peu coûteux à extraire. Ces caractéristiques sont déterminantes pour le développement de gros accumulateurs au lithium applicables notamment au marché du véhicule électrique dont le besoin devient pressant avec l'accumulation dans l'environnement des gaz à effet de serre.

Il existe donc un besoin pour la mise au point d'un nouveau procédé plus simple et plus reproductible, moins onéreux que ceux déjà connus tout en offrant des performances améliorées, en particulier, pour toute nouvelle technique permettant de fabriquer des quantités importantes de matériau sans perdre le contrôle de la qualité, liée à la pureté des phases obtenues et l'obtention de granulométries adaptées en particulier aux applications électrochimiques, ceci d'une manière reproductible.

### RÉSUMÉ DE L'INVENTION

La présente invention décrit un procédé de synthèse de composés de formule LiₓM_{1-y}M'_{y}(PO₄)ₙ, par mise en équilibre dans les proportions requises d'un mélange comprenant des précurseurs des constituants du composé et la réduction du mélange équilibré des précurseurs avec une atmosphère gazeuse réductrice. Le mélange initial est additionné d'une source de carbone ce qui permet la préparation des composés de formule LiₓM_{1-y}M'_{y}(XO₄)ₙ sous la forme d'un matériau constitué de grains enrobés de carbone. Le matériau ainsi obtenu possède une excellente une taille et une forme contrôlable des grains et de leur conductivité.

Ces matériaux sont utilisables pour la préparation notamment de cellules électrochimiques comprenant un électrolyte et au moins deux électrodes dont au moins une comprend au moins un matériau synthétisé selon un des procédés de l'invention.

### BRÈVE DESCRIPTION DES DESSINS

- **Figure 1 :**: 1^{er} cycle obtenus par voltammétrie lente (v = 20 mV.h⁻¹) à 80°C pour une batterie contenant LiFePO₄ non carboné synthétisé à partir de FePO₄.2H₂O (réduction par l'hydrogène) (traits pleins) comparé au même échantillon après carbonisation (traits pointillés).
- **Figure 2 :**: Morphologie de LiFePO₄ carboné synthétisé à partir de FePO₄.2H₂O (réduction par l'hydrogène). Micrographie prise au microscope électronique à balayage grossissement × 5.000.
- **Figure 3 :**: 5^{ème} cycle obtenu par voltammétrie lente (v = 20 mV.h⁻¹) à 80°C d'une batterie contenant LiFePO₄ carboné synthétisé à partir de FePO₄.2H₂O (réduction par l'hydrogène) (traits pleins) comparé un LiFePO₄ obtenu selon CA-A-2,270,771 suivi d'un étape de dépôt de carbone(traits pointillés).
- **Figure 4 :**: Profils de charge et de décharge réalisés en mode galvanostatique à 80°C et à deux vitesses de charge et décharge (C/8 : traits pleins et C/2 traits pointillés) pour des batteries contenant LiFePO₄ carboné synthétisé à partir de FePO₄.2H₂O (réduction par l'hydrogène).
- **Figure 5 :**: Évolution de la capacité au cyclage d'une batterie contenant LiFePO₄ carboné synthétisé à partir de FePO₄.2H₂O selon l'exemple 2 (réduction par l'hydrogène) - Voltammétrie lente (v=20 mV.h⁻¹) à 80° C d'une batterie contenant LiFePO₄ synthétisé à partir de FePO₄.2H₂O (réduction par le carbone).
- **Figure 6 :**: 5^{ème} cycle obtenu par voltammétrie lente (v = 20 mV.h⁻¹) à 80°C de batteries contenant LiFePO₄ carboné synthétisé à partir de FePO₄.2H₂O (réduction par CO/CO₂). 1/1) pour des échantillons contenants différents pourcentages de carbone (0.62% : traits pleins, 1.13 % traits pointillés, 1.35% traits gras).
- **Figure 7 :**: Microscopie électronique à balayage - Nanoparticules aglomérées de FePO₄·2H₂O Budenheim (grade E53-81).
- **Figure 8 :**: Microscopie MEB montrant une particule du type LiFePO obtenue par réaction à l'état solide entre les nanoparticules agglomérées de FePO₄·2H₂O Budenheim (grade E53-81) et le Li₂CO₃ Limtech (99.9%) en présence d'additif carboné de type polyéthylène.
- **Figure 9 :**: Microscopie MEB des particules denses de phosphate ferrique dihydrate de Budenheim grade E53-82.
- **Figure 10:**: Triphylite synthétisé à partir de particules denses de phosphate ferrique de Budenheim grade E53-82 en présence d'additif carboné de type polyéthylène.
- **Figure 11:**: 5^{ème} cycle obtenu par voltamétrie lente (80°C, mV.h⁻¹) pour l'échantillon préparé à partir de phosphate de fer de l'exemple 4 et à partir de phosphate de fer de l'exemple 5.
- **Figure 12:**: Évolution de la capacité obtenue en décharge au cours du cyclage pour l'échantillon préparé à partir de phosphate de fer de l'exemple 4 et à partir de phosphate de l'exemple 5 (Voltamétrie cyclique lente 20 mV.h⁻¹, 80°C).
- **Figure 13:**: Profils de charge et de décharge obtenus pr voltamétrie lente (20 mV.h⁻¹, 80°D) d'un échantillon de LiFePO₄ produit à l'échelle pilote à partir de FePO₄2H₂O 6*µ*m (réduction par CO/CO₂ 1/1) selon l'exemple 7.
- **Figure 14:**: Profils de charge et de décharge obtenus par voltamétrie lente, (20 mV.h⁻¹, 80°C) d'un échantillon de LiFePO₄ préparé à partir de FePO₄2H₂O selon l'exemple 8.
- **Figure 15:**: Profils de charge et de décharge obtenus par voltamétrie lente (20 mV.h⁻¹, 80°C) d'un échantillon de LiFePO₄ préparé à partir de de FePO₄2H₂O selon l'exemple 9.

### DESCRIPTION DE L'INVENTION

Un premier objet de la présente invention est constitué par un procédé de synthèse de particules d'un oxyde complexe enrobé de carbone, ledit oxyde complexe ayant sensiblement une structure olivine et répondant à la formule LiₓM_{1-y}M'_{y}(XO₄)ₙ dans laquelle x, y et n sont des nombres tels que 0 ≤ x ≤ 2, 0 ≤ y ≤0,6, et 1 ≤ n ≤ 1,5, M est un métal de transition ou un mélange de métaux de transition de la première ligne du tableau périodique, M' est un élément de valence fixe choisi parmi Mg²⁺, Ca²⁺, Al³⁺, Zn²⁺ ou une combinaison de ces mêmes éléments et P est éventuellement remplacé partiellement par au moins un élément choisi parmi Si et S, ledit procédé étant caractérisé en ce que :
- la synthèse se fait par réaction de mise en équilibre, thermodynamique ou cinétique, d'un mélange dans les proportions requises (préférentiellement intime et/ou homogène) de composés sources suivants :
   a) une source de M,
   b) une source d'un élément M' lorsque y>0
   c) un composé source de lithium
   d) un composé source de P et éventuellement un composé source d'un élément Si ou S ;
   e) une source de carbone conducteur ;
      avec une atmosphère gazeuse réductrice ;
- la synthèse est effectuée en contrôlant la composition de ladite atmosphère gazeuse la température de la réaction de synthèse et le taux du composé source c) relativement aux autres composés sources a), b) et d); pour imposer l'état d'oxydation du métal de transition au degré de valence voulu pour la constitution du composé de type LiMPO₄ ;
- la température de la synthèse est supérieure à la température à laquelle l'atmosphère réative est capable de réduire le ou les éléments de transition à leur état d'oxydation requis dans le composé LiMPO₄, la température et la durée de la synthèse sont inférieures respectivement à la température et à la durée amenant une réduction du ou des éléments de transition à l'état métallique ou une oxydation du carbone résultant de la pyrolyse de la substance organique ;
- le procédé comporte au moins une étape de pyrolyse du composé source e).

Le composé obtenu a une conductivité électronique, mesurée sur un échantillon de poudre compactée, à une pression de 3750 Kg.cm⁻², supérieure à 10⁻⁸ S.cm⁻¹.

La mesure de la conductivité est effectuée sur des poudres de l'échantillon. Cette poudre (de 100 mg à 1g environ) est mise dans un moule cylindrique creux de 1,3 cm de diamètre, réalisé en poly(oxymethylène) (Delrin®) et elle est compactée entre deux pistons d'acier inoxydable à l'aide d'une presse de laboratoire à une force de 5.10³ Kg ce qui correspond à une pression de 3750 Kg.cm⁻².

La mesure de conductivité est effectuée en utilisant les pistons (plungers) comme électrodes et par la méthode de l'impédance complexe connue de la personne de la technique considérée. La conductivité est obtenue à partir de la résistance par la formule *ρ*=^{RS}/ₗ, où R est la résistance mesurée, et S la surface (1,33 cm² pour 1,3 cm de diamètre), *l* l'épaisseur de l'échantillon et la résistivité est déterminée par la formule *p*=*^{RS}*/*ₗ*.
Selon une variante avantageuse, au moins une partie du ou desdits métaux de transition qui composent M se trouvent dans un état d'oxydation supérieur ou inférieur à celui du métal dans le composé final. LiₓM_{1-y}M'_{y}(PO₄)ₙ.
La réaction de synthèse entre les composés sources a) à d) est avantageusement effectuée simultanément à la réaction de pyrolyse du composé source e).
Selon un mode préférentiel de réalisation de la synthèse selon la présente invention, la réaction de pyrolyse est effectuée en une seconde étape, consécutive à la réaction de synthèse entre les composés sources a) à d) et de préférence sous atmosphère gazeuse réductrice ou neutre.
Les composés de formule LiₓM_{1-y}M'_{y}(PO₄)ₙ synthétisés sont avantageusement obtenus sous forme de particules et en ce que la taille et/ou la forme des particules du composé LiₓM_{1-y}M'_{y}(PO₄)ₙ est déterminée essentiellement par la taille et la forme du mélange intime et/ou homogène des précurseurs utilisés pour la réaction du synthèse et plus particulièrement par la taille et/ou la forme des précurseurs M et M' de départ. Dans ce cas, la taille des particules de composé LiₓM_{1-y}M'_{y}(PO₄)ₙ obtenues est comprise entre 0,1 et 10 micromètres.
De façon préférentielle, la taille et la forme des particules de composé LiₓM_{1-y}M'_{y}(PO₄)ₙ ne diffère pas de plus de 80 % de celle de la taille des précurseurs a) à d), de préférence dans laquelle la taille et la forme des particules de composé LiₓM_{1-y}M'_{y}(PO₄)ₙ ne diffère pas de plus de 80 % de celle du précurseur a) et le cas échéant de celle du précurseur b).
Selon un mode de réalisation avantageux de la présente synthèse, la teneur du composé source de carbone (appelé carbone conducteur) est choisi de façon à enrober de carbone, au moins une partie de la surface des particules du composé de formule LiₓM_{1-y}M'_{y}(PO₄)ₙ.
La teneur en carbone lié est inférieure à 5 %, préférentiellement inférieure à 3 % de la masse du composé de formule LiₓM_{1-y}M'_{y}(PO₄)ₙ
De façon préférentielle, au moins 30 % de la surface des particules du composé de formule LiₓM_{1-y}M'_{y}(PO₄)ₙ est recouverte de carbone

Selon un autre mode avantageux de réalisation de l'invention, la teneur de composé source de carbone conducteur dans le milieu réactionnel est choisie de façon à lier les particules du composé LiₓM_{1-y}M'_{y}(PO₄)ₙ entre elles et à constituer des agglomérats de tailles comprises entre 1 et 20 microns. La teneur en carbone lié est alors inférieure à 7 %, de préférence inférieure à 5 % de la masse du composé de formule LiₓMi_{y}M_{1-y}(PO₄)ₙ.

Le procédé selon l'invention permet de contrôler la forme finale du composé LiₓM_{1-y}M'_{y}(PO₄)ₙ en choisissant la forme donnée au mélange des précurseurs a) à d) avant synthèse. Ainsi, une technique utilisée pour donner une forme particulière au mélange des précurseurs est avantageusement choisie dans le groupe des techniques d'atomisation, de précipitation, de coprécipitation, d'agglomération et/ou de pelletisation.

Lorsque la technique utilisée pour donner une forme particulière au mélange des précurseurs est l'atomisation, la forme finale du composé LiₓM_{1-y}M'_{y}(PO₄)ₙ obtenu est celle d'agglomérats sphériques de tailles comprise entre 1 et 30 microns , les dits agglomérats étant constitués de plus petites particules de composé de formule

LiₓM_{1-y}M'_{y}(PO₄)ₙ.

Selon un mode préférentiel, la substance organique source de carbone conducteur est sélectionnée dans le groupe constitué par les polymères et oligomères contenant un squelette carboné, les hydrates de carbone simples ou polymères et les hydrocarbures aromatiques.

Selon un autre mode préférentiel, la source de carbone conducteur contient, dans un même composé ou dans le mélange qui constitue cette source, de l'oxygène et de l'hydrogène liés chimiquement et dont la pyrolyse libère localement de l'oxyde de carbone et / ou du dioxyde de carbone et / ou de l'hydrogène et de la vapeur d'eau contribuant, outre le dépôt de carbone, à créer localement l'atmosphère réductrice requise pour la synthèse du matériau LiₓM_{1-y}M'_{y}(PO₄)ₙ.

De façon préférentielle, le composé source de carbone conducteur est principalement constitué d'un copolymère bloc comprenant au moins un segment pyrolisable source de carbone et un segment soluble dans l'eau et les solvants organiques de façon à permettre sa distribution, de préférence de façon homogène, autour du composé LiₓM_{1-y}M'_{y}(PO₄)ₙ ou de ses précurseurs.

Avantageusement, la substance organique source de carbone conducteur est au moins un des composés du groupe constitué par le polyéthylène, le polypropylène, le glucose, le fructose, le sucrose, le xylose, le sorbose, l'amidon, la cellulose et ses esters, les polymères blocs d'éthylène et d'oxyde d'éthylène et les polymères de l'alcohol furfurylique.

Selon un mode avantageux de réalisation de la synthèse selon la présente invention, les composés sources a) à d) sont sous forme de poudre ou au moins partiellement compactés sous forme de pastilles, préalablement à la synthèse (réalisée de préférence de façon continue), de façon à augmenter les points de contacts entre les réactifs et de façon à augmenter la densité du produit final tout en permettant la réaction avec la phase gazeuse.

La phase gazeuse pouvant circuler dans le réacteur dans le même sens ou préférentiellement à contre-courant de l'alimentation en précurseurs.

De préférence, le composé source de carbone conducteur est présent lors de l'étape de compaction des composés a) à d).

Le procédé de synthèse est préférentiellement réalisé en continu de préférence dans un réacteur favorisant l'équilibre des poudres solides agglomérées ou non avec la phase gazeuse, par exemple parmi de tels réacteurs, les fours rotatifs, les lits fluidisés, les fours à courroies, les dits fours permettant le contrôle de la composition et de la circulation de l'atmosphère gazeuse. Dans ce cas, le débit solide est supérieur à 1 kg/h, les températures sont de préférence comprises entre 650 et 800 degrés Celsius, le temps de résidence est préférentiellement inférieur à 5 heures et plus préférentiellement encore inférieur à ½ heure.

La réduction est obtenue préférentiellement par l'action d'une atmosphère réductrice choisie de façon à pouvoir réduire l'état d'oxydation de l'ion métallique M au niveau requis pour la constitution du composé sans toutefois le réduire à l'état métallique neutre.

L'atmosphère réductrice contient avantageusement de l'hydrogène ou un gaz capable de générer de l'hydrogène dans les conditions de la synthèse, de l'ammoniac ou une substance capable de générer de l'ammoniac dans les conditions de la synthèse ou du monoxyde de carbone, ces gaz étant utilisés purs ou en mélanges et pouvant également être utilisés en présence de vapeur d'eau et/ou en présence de dioxyde de carbone et/ou en présence d'un gaz neutre (tel que l'azote ou l'argon).

Selon un autre mode préférentiel de réalisation, l'atmosphère réductrice est constituée par un mélange CO/CO₂ ou H₂/H₂O, NH₃/H₂O ou leur mélange, générant une pression d'équilibre d'oxygène inférieure ou égale à celle déterminée par le métal de transition au degré d'oxydation correspondant aux précurseurs introduits pour former le composé LiₓM_{1-y}M'_{y}(PO₄)ₙ, mais supérieure à celle correspondant à la réduction d'un quelconque des éléments de transition présent à l'état métallique, assurant la stabilité thermodynamique de LiₓM_{1-y}M'_{y}(PO₄)ₙ dans le mélange réactionnel, indépendamment du temps de réaction de la synthèse.

De préférence, l'atmosphère gazeuse est constituée par un mélange CO/CO₂ ou H₂/H₂O, NH₃/H₂0 ou leur mélange, générant une pression d'équilibre d'oxygène supérieure ou égale à celle déterminée par au moins des éléments de transition lorsque le précurseur est introduit sous forme métallique pour former le composé LiₓM_{1-y}M'_{y}(XO₄)ₙ, mais supérieure à celle correspondant à un sur-oxydation des éléments de transition au delà de leur valence assignée dans LiₓM_{1-y}M'_{y}(PO₄)ₙ assurant la stabilité thermodynamique de LiₓM_{1-y}M'_{y}(PO₄)ₙ dans le mélange réactionnel, indépendamment du temps de réaction de la synthèse

L'atmosphère réductrice est préférentiellement constituée par un mélange CO/CO₂, H₂/H₂O, NH₃/H₂O ou leur mélange, générant une pression d'équilibre d'oxygène inférieure ou égale à celle déterminée par un des métaux de transition présent dans LiₓM_{1-y}M'_{y}(PO₄)ₙ, pouvant éventuellement conduire à la réduction d'au moins cet élément de transition à l'état métallique, l'obtention du composé LiₓM_{1-y}M'_{y}(PO₄)ₙ, étant réalisée par le contrôle de la température et du temps de contact avec la phase gazeuse ou de la proportion du précurseur c) dans le mélange réactionnel; la température de synthèse étant préférentiellement comprise entre 200 et 1.200 °C, plus préférentiellement encore entre 500 et 800°C, et le temps de contact du mélange réactionnel avec la phase gazeuse étant préférentiellement compris entre 2 minutes et 5 heures et plus préférentiellement encore entre 10 et 60 minutes.

L'atmosphère gazeuse réductrice peut avantageusement être obtenue est obtenue par décomposition sous vide ou sous atmosphère inerte, d'un composé organique ou d'un mélange de composé organiques contenant, liés chimiquement, au moins de l'hydrogène et de l'oxygène, et dont la pyrolyse génère du monoxyde et carbone et / ou un mélange de dioxyde et de monoxyde de carbone, de l'hydrogène et / ou un mélange hydrogène et vapeur d'eau susceptibles d'effectuer la réduction amenant à la formation du composé LiₓM_{1-y}M'_{y}(PO₄)ₙ.

Selon une variante préférentielle, l'atmosphère gazeuse réductrice est obtenue par oxydation partielle par l'oxygène ou par l'air, d'un hydrocarbure et/ou de carbone, éventuellement en présence de vapeur d'eau (préférentiellement la vapeur d'eau et à une teneur comprise, bornes comprises, entre 0,1 et 10 molécules d'H₂O par atome de carbone de l'hydrocarbure), à un température élevée (préférentiellement comprise entre 400 et 1.200 °C) permettant la formation de monoxyde de carbone ou d'hydrogène ou d'un mélange de monoxyde de carbone et d'hydrogène.

La phase gazeuse est constituée d'un gaz réformé in-situ ou ex-situ. Dans ce cas, l'atmosphère du gaz réformé est obtenue à partir du méthane, à partir du propane, à partir d'un gaz naturel, ou à partir d'un mélange de ces derniers, additionné d'air, et éventuellement de vapeur d'eau, à une pression partielle prédéterminée, par condensation ou injection dans le mélange réformé.

Le traitement thermique (qui inclut la réaction de formation de LiₓM_{1-y}M'_{y}(PO₄)ₙ et la réduction et la pyrolyse et éventuellement la déshydratation d'une ou de plusieurs sources a) à d)) est réalisé par chauffage depuis la température ordinaire jusqu'à une température comprise entre 500 et 1.100 °C. La température maximale atteinte est préférentiellement comprise entre 500 et 800 °C.

Selon un mode avantageux de réalisation de la synthèse, le temps de résidence des réactifs dans l'étape de traitement thermique est inférieur à 5 heures, de préférence inférieur à 1 heure.

La synthèse selon la présente invention permet de préparer le composé de formule LiₓM_{1-y}M'_{y}(PO₄)ₙ, dans laquelle n=1, d'une capacité électrochimique, supérieure à 150 mAh/g⁻¹, mesurée pour des intensités spécifiques supérieures à 10 mA.g⁻¹.

Selon un mode avantageux, la source de M est également source de P et/ou la source de M' est également source de P et/ou la source de lithium est également source de P et/ou la source de P est également source de lithium.

La mise en équilibre du mélange de précurseurs a) à d) est facilitée sous forme de mélange intime et/ou homogène de la phase solide et de la phase gazeuse.

De préférence, le ou les métaux de transition est (sont) choisi(s) au moins en partie dans le groupe constitué par le fer, le manganèse, le cobalt et le nickel, le complément des métaux de transition étant préférentiellement choisi dans le groupe constitué par le vanadium, le titane, le chrome et le cuivre.

Avantageusement, le composé source de M est dans un état d'oxydation pouvant varier de 3 à 7.

De façon préférentielle, le composé source de M est l'oxyde de fer III ou la magnétite, le dioxide de manganèse, le pentoxyde de di-vanadium, le phosphate de fer trivalent, l'hydroxyphosphate de fer et de lithium ou le nitrate de fer trivalent, ou un mélange de ces derniers.

De façon avantageuse, le composé source de lithium est choisi dans le groupe constitué par l'oxyde ou l'hydroxyde de lithium, le carbonate de lithium, le phosphate neutre Li₃PO₄, le phosphate acide LiH₂PO₄, l'ortho, le méta ou les poly silicates de lithium, le sulfate de lithium, l'oxalate de lithium et l'acétate de lithium, ou un mélange de ces derniers. Le composé source de lithium est le carbonate de lithium de formule Li₂CO₃.

La source de P est choisie dans le groupe constitué par l'acide phosphorique et ses esters, le phosphate neutre Li₃PO₄ ou le phosphate acide LiH₂PO₄, les phosphates mono- ou di-ammonique, le phosphate de fer trivalent, le phosphate de manganèse et d'ammonium (NH₄MnPO₄), et les mélanges de ces derniers. Le composé précurseur de P est préférentiellement le phosphate de fer, anhydre ou hydraté.

Le procédé selon l'invention permet en particulier la synthèse avantageuse d'un ou de plusieurs des dérivés du lithium de formule LiFePO₄, LiFe₁₋ₛMnₛPO₄ avec 0 ≤ s ≤ 0,9, LiFe_{1-y}Mg_{y}PO₄ et LiFe_{1-y}Ca_{y}PO₄ avec 0 ≤ y ≤ 0,3, LiFe_{1-s-y}MnₛMg_{y}PO₄ avec 0 ≤ s ≤ 1 et 0 ≤ y ≤ 0,2, Li₁₊ₓFeP₁₋ₓSiₓO₄ avec 0 ≤ x ≤ 0,9, Li₁₊ₓFe₁₋ₛMnₛP₁₋ₓSiₓO avec 0 ≤ s ≤ 1, Li_{1+z}Fe_{1-s-z}MnₛP_{1-z}S_{z}O₄ avec 0 ≤ s ≤ 1, 0 ≤ z ≤ 0,2, Li_{1+2q}Fe_{1-s-q}MnₛPO₄ avec 0 ≤ s ≤ 1, et 0 ≤ q ≤ 0,3, Li₁₊ᵣFe₁₋ₛMnₛ(S₁₋ᵣPᵣO₄)_{1,5} avec 0 ≤ r ≤ 1, 0 ≤ s,t ≤ 1 et Li_{0,5+u}Fe₁₋ₗTiₜ(PO₄)_{1,5}. avec 0 ≤ t≤1 et avec 0 ≤ u ≤ 1,5.

Avantageusement la synthèse est appliquée aux composés de formule LiₓM_{1-y}M'_{y}(PO₄)ₙ qui ont une structure olivine ou Nasicon, incluant la forme monoclinique.

Les paramètres réactionnels sont avantageusement choisis, en particulier la cinétique de la réduction par la phase gazeuse, de façon à ce que le carbone conducteur ne soit pas consommé au cours du processus de réduction.

La teneur en substance source de carbone conducteur, présent dans le milieu réactionnel soumis à réduction, est choisie de façon à ce que la teneur en carbone conducteur dans le milieu réactionnel soit préférentiellement comprise entre 0,1 et 25 %, plus préférentiellement encore pour qu'elle soit comprise entre 0,3 et 1,5 % de la masse totale du mélange réactionnel.

La température et la durée de la synthèse sont quant à elles choisies en fonction de la nature du métal de transition, c'est-à-dire au-dessus d'une température minimum à laquelle l'atmosphère réactive est capable de réduire le ou les éléments de transition à leur état d'oxydation requis dans le composé LiₓM_{1-y}M'_{y}(PO₄) et en dessous d'une température ou d'un temps amenant une réduction du ou des éléments de transition à l'état métallique ou une oxydation du carbone résultant de la pyrolyse de la substance organique.

Le traitement thermique est préférentiellement réalisé par chauffage depuis la température ordinaire jusqu'à une température comprise entre 500 et 1.100 °C, en présence d'une atmosphère réductrice. De façon plus avantageuse, la température maximale atteinte est comprise entre 500 et 800 °C.

Selon un autre mode avantageux, le composé LiₓM_{1-y}M'_{y}(PO₄)ₙ est le LiMPO₄ et dans lequel le taux de carbone conducteur après pyrolyse est compris entre 0,1 et 10 % en masse par rapport à la masse du composé LiMPO₄.

Le composé source de carbone est préférentiellement choisi de façon à être facilement dispersable lors du traitement utilisé pour assurer un mélange intime avec les précurseurs a) à d) par agitation et/ou par solubilisation, par broyage mécanique et/ou par homogénéisation ultrasonore, en présence ou non d'un liquide, ou par spay-drying d'une solution d'un ou de plusieurs précurseurs et ou d'une suspension et ou d'une émulsion.

La synthèse est particulièrement performante pour la préparation du composé obtenu a la formule LiFePO₄.

Le noyau des particules obtenues est essentiellement (de préférence pour au moins 95 %) constitué d'un composé de formule LiFePO₄, le complément étant avantageusement essentiellement constitué de composés ayant une structure voisine de LiFePO₄ et, dans lequel le matériau obtenu possède préférentiellement une teneur en carbone conducteur comprise entre 0,2 et 5 % par rapport à la masse de particules obtenues.

Un deuxième objet de l'invention est constitué par un matériau constitué de particules d'un oxyde complexe enrobé de carbone, ledit oxyde complexe ayant sensiblement une structure olivine et répondant à la formule LiₓM_{1-y}M'_{y}(PO₄)ₙ, dans laquelle : x, y et n sont des nombres tels que 0 ≤ x ≤ 2, 0<y ≤ 0,6, et 1< n ≤ 1,5, x, y et n sont des nombres tels que 0 ≤ x ≤ 2, 0 ≤ y ≤ 0,6, et 1 ≤ n ≤ 1,5 ; M est un métal de transition ou un mélange de métaux de transition de la première ligne du tableau périodique, M' est un élément de valence fixe choisi parmi Mg²⁺, Ca²⁺, Al³⁺, Zn²⁺ ou une combinaison de ces même éléments et P est éventuellement remplacé partiellement par au moins un élément choisi parmi Si et S, ledit matériau étant obtenu sous forme de particules ayant une dimension de 0,05 à 30 µm, par synthèse sous atmosphère réductrice..

Un tel matériau a de préférence une conductivité électronique, mesurée sur un échantillon de poudre compactée à une pression de 3000 Kg;cm⁻², supérieure à 10⁻⁸ S.cm⁻¹.

Dans ces valeurs de la granulométrie, sont inclus les agglomérats de particules plus fines, éventuellement liées entre elles par frottage ou pontés entre elles par le carbone conducteur et formant des entités, de préférence quasi-sphérique.

Un troisième objet de la présente demande est constitué par une cellule électrochimique comprenant au moins deux électrodes et au moins un électrolyte, caractérisée en ce qu'au moins une de ses électrodes comprend le matériau selon le deuxième objet de la présente invention.

Selon un mode avantageux, l'électrolyte est un polymère, solvatant ou non, optionnellement plastifié ou gélifié par un liquide polaire contenant en solution un ou plusieurs sels métalliques.

L'électrolyte est un liquide polaire immobilisé dans un séparateur microporeux et contenant en solution un ou plusieurs sels métalliques. De préférence, au moins un des sels métalliques est un sel de lithium.

Selon un autre mode avantageux, au moins une des électrodes négatives est du lithium métallique, un alliage de lithium, notamment avec l'aluminium, l'antimoine, le zinc, l'étain, éventuellement en mélange nanomoléculaire avec de l'oxyde de lithium, ou un composé d'insertion du carbone, notamment du graphite, un nitrure double de lithium et de fer, de cobalt ou de manganèse, un titanate de lithium de formule LiₓTi_{(5+3y)/4}O₄, avec 1 ≤ x ≤(11-3y)/4 (ou) avec 0 ≤ y ≤1.

Avantageusement, une des électrodes positives contient un des produits susceptibles d'être obtenu par un procédé selon l'invention, utilisé seul ou en mélange avec un oxyde double de cobalt et le lithium, ou un avec un oxyde complexe de formule LiₓNi_{1-y-z-q-r}Co_{y}Mg_{z}AlᵣO₂ avec 0,1 ≤ x ≤ 1, 0 ≤ y, z et r ≤ 0.3, ou avec un oxyde complexe de formule LiₓMn_{1-y-z-q-r}Co_{y}Mg_{z}AlrO_{2-q}F_{q} avec 0.05 ≤ x ≤ 1 et 0 ≤ y, z, r, q ≤ 0.3.

Le polymère utilisé pour lier les électrodes ou comme électrolytes est avantageusement un polyéther, un polyester, un polymère basé sur les unités méthacrylate de méthyle, un polymère à base d'acrylonitrile, et/ou un fluorure de vinylidène, ou un mélange de ces derniers.

La cellule peut comporter un solvant non protogénique qui comprend par exemple du carbonate d'éthylène ou de propylène, un carbonate d'un alkyle ayant de 1 à 4 atomes de carbone, de la γ-butyrolactone, une tétraalkylsufamide, un *α-ω* dialkyléther d'un mono-, di-, tri-, tetra- or oligo- éthylene glycol de poids moléculaire inférieur ou égal à 5000, ainsi que les mélange des solvants susnommés.

La cellule selon la présente invention, fonctionne préférentiellement comme générateur primaire ou secondaire, comme super-capacité ou comme système de modulation de la lumière.

Avantageusement, la cellule de l'invention fonctionne comme super capacité, alors en ce que le matériau de l'électrode positive est le deuxième objet de l'invention et l'électrode négative un carbone de surface spécifique supérieure à 1 m².g⁻¹, de préférence supérieure à 5 m².g⁻¹ sous forme de poudre, de fibre ou de composite mésoporeux de type composite carbone-carbone.

La cellule électrochimique peut aussi fonctionner comme système de modulation de la lumière et dans ce cas, la contre-électrode optiquement inactive est un matériau selon le deuxième objet de l'invention épandu en couche mince sur un support transparent conducteur, de type verre ou polymère recouvert d'un oxyde d' étain dopé (SnO₂:Sb ou SnO₂:F) ou d'un oxyde d'indium dopé (In₂O₃:Sn).

### Modes préférentiels

L'invention proposée porte sur une nouvelle voie de synthèse simplifiée des composés LiₓMPO₄ à structure olivine obtenus par réduction d'un mélange dans lequel au moins une partie du métal de transition M se trouve dans un état d'oxydation supérieur à celui du composé final LiMPO₄. Un autre avantage surprenant de la présente invention est d'être également compatible avec la synthèse décrite dans CA-A-2.270.771, qui conduit à des performances optimisées. Dans ce cas, le composé organique, source de carbone, est ajouté au mélange des réactifs de départ contenant au moins une partie du métal de transition dans un état d'oxydation supérieur à celui du composé lithium LiMPO₄ et la synthèse simplifiée conduit directement au matériau recouvert de carbone à un taux faible sans que ce dernier ne soit oxydé par la réduction du métal d'état d'oxydation supérieur. La simplification porte notamment sur la réduction du nombre des étapes et surtout du nombre des étapes où il faut contrôler l'atmosphère. On peut se référer pour cela à l'ouvrage "Modem Batteries", de C.A. Vincent,& B. Scrosati, Arnold publishers, London, Sydney, Auckland, (1997).

Les améliorations portent également sur la reproductibilité de la synthèse, sur le contrôle de la taille et de la distribution des particules, ainsi que sur la réduction du nombre et du coût des réactifs de départ et bien entendu du matériau final. Cette synthèse, lorsque combinée à l'enseignement de CA-A-2.270.771, permet également de contrôler la teneur en carbone du matériau final.

Nous rapportons ici, pour la première fois la synthèse d'un composé LiₓMPO₄ de type olivine, en l'occurrence LiFePO₄, réalisée par réduction par une phase gazeuse d'un sel de fer III. Les sels de départ n'étant plus sensibles à l'oxydation, le processus de synthèse s'en trouve très simplifié. De plus l'utilisation possible de Fe₂O₃ comme source de fer réduit considérablement le coût de synthèse de LiFePO₄. Ce matériau aurait alors la préférence face à d'autres matériaux de cathode pour batterie au lithium, tels que les oxydes de cobalt ou de nickel dans le cas des accumulateurs de type lithium-ion, ou les oxydes de vanadium V₂O₅ ou analogues moins inoffensifs pour l'environnement.

LiFePO₄ peut être préparé à partir d'un sel de fer III, stable à l'air, par exemple FePO₄.2H₂O ou Fe₂O₃ ou de toute autre source de fer III. La source de lithium étant par exemple Li₂CO₃ dans le premier cas, ou LiOH. LiH₂PO₄ ou Li₃PO₄ étant utilisé comme source conjointe de lithium et de phosphore dans le second cas. Les mélanges stœchiométriques ainsi que le précurseur de carbone sont traités à 700°C pendant 4 heures sous balayage d'un excès d'atmosphère réductrice de façon à réduire l'état d'oxydation du fer. Le choix de l'atmosphère et de la température de synthèse sont très importants afin de pouvoir réduire le fer III en fer II sans que l'atmosphère gazeuse ou le carbone présent ne puissent réduire le fer à l'état métallique. Cette dernière sera préférentiellement, mais de façon non-limitative, constituée par exemple d'hydrogène, d'ammoniac, d'un mélange gazeux capable de fournir de l'hydrogène dans les conditions de la synthèse, l'hydrogène pouvant être utilisé pur ou dilué dans un gaz inerte sec ou hydraté, d'oxyde de carbone, éventuellement mélangé avec de dioxyde de carbone et/d'un gaz neutre sec ou hydraté. La température maximale du traitement thermique est choisie de telle sorte que le carbone présent soit thermodynamiquement stable vis-à-vis du fer II et de préférence vis-à-vis de la phase gazeuse. Dans le cas du fer, la zone de température limite se situe entre 500 et 800°C, de préférence vers 700°C. Au-delà de ces températures, le carbone devient suffisamment réducteur pour réduire le fer II en fer métallique. Dans le cas des autres métaux de transition, toute personne du métier pourra utiliser les courbes d'Ellingham pour adapter la température et la nature de l'atmosphère gazeuse de façon à obtenir un résultat équivalent.

Un aspect inattendu et surprenant de l'invention, qui en fait son avantage, est la relative inertie chimique du carbone déposé à la surface du matériau par rapport aux réactions permettant de réduire le degré d'oxydation du métal de transition, en particulier, du fer. Du point de vue thermodynamique, le carbone formé par décomposition de la substance organique pyrolysée a un pouvoir suffisamment réducteur pour s'oxyder en CO₂ ou CO et réduire, même sous atmosphère inerte, le Fer III en Fer II, ce qui aurait rendu le contrôle de la teneur du produit final en carbone difficile particulièrement aux taux de carbone faibles utilisés dans la présente invention. Les inventeurs ont remarqué que la réaction de réduction était essentiellement due à l'action de l'atmosphère gazeuse réductrice, dont la cinétique est plus rapide que celle due à l'action du carbone déposé en surface, malgré le contact intime entre les deux phases solides (carbone et matériau rédox). En employant une atmosphère réductrice, préférentiellement à base d'hydrogène, d'ammoniac ou d'oxyde de carbone, la réduction du fer par le carbone solide n'est pas favorisée cinétiquement, et le Fer III est réduit en Fer II principalement par réaction avec l'atmosphère réductrice. La teneur en carbone dans le produit final correspond donc pratiquement au rendement de décomposition de la substance organique, ce qui permet de contrôler ladite teneur.

Un effet surprenant de la présente invention, utilisant une réaction équilibrée en la phase gazeuse et les réactifs solides est de pouvoir obtenir le composé LiM'M"(PO₄)ₙ à partir de fer de degré d'oxydation,en utilisant des mélanges gazeux CO/CO₂.

Les exemples suivants sont donnés afin de mieux illustrer la présente invention, mais ils ne sauraient être interprétés comme constituant une limitation de la portée de la présente invention.

### EXEMPLES

### Exemple 1 - Synthèse de LiFePO₄ à partir du phosphate de fer sous atmosphère réductrice.

LiFePO₄ a été préparé par réaction de FePO₄.2H₂O et Li₂CO₃ en présence d'hydrogène. Dans une première étape, les quantités stœchiométriques des deux composés sont broyées ensemble dans l'isopropanol, puis chauffées progressivement (6 C par minute jusqu'à 700°C) dans un four tubulaire sous balayage de gaz réducteur (8% d'hydrogène dans de l'argon). Cette température est maintenue pendant une heure. L'échantillon est refroidi en 40 minutes soit avec une vitesse de refroidissement d'environ 15 °C par minute.

Durant tout le traitement thermique et également y compris lors de la descente en température, le flux de gaz réducteur est maintenu. La durée totale du traitement thermique est d'environ 3 heures et demie.

La structure de l'échantillon a été vérifiée par diffraction RX et les raies correspondent à celles de la triphylite LiFePO₄ pure et la conduction électronique de la poudre LiFePO₄ ainsi obtenue compressée à 5 tonnes pour 1,3 cm de diamètre et trop faible pour pouvoir être mesurée.

### Exemple 1': Préparation de LiFePO₄ enrobé de carbone synthétisé à partir de l'échantillon préparé à l'exemple 1

La triphylite obtenue à l'exemple 1 est imprégnée d'une solution d'acétate de cellulose (teneur de 39,7% en poids d'acetyl, poids moléculaire moyen Mw de 50.000) dans l'acétone. La quantité d'acétate de cellulose ajoutée représente 5% du poids de triphylite traitée. L'utilisation d'un précurseur de carbone en solution permet une parfaite répartition sur les particules de triphylite. Après séchage, le mélange est placé dans le four décrit précédemment, sous balayage d'une atmosphère d'argon. La température est augmentée de 6°C par minute jusqu'à 700 °C. Cette dernière température est maintenue une heure. L'échantillon est alors refroidi progressivement, toujours sous balayage d'argon. Cet échantillon contient 1% en poids de carbone, ce qui correspond à un rendement de carbonisation de l'acétate de cellulose de 20%.

Le matériau présente une conductivité électronique de surface. Cette dernière a été mesurée sur une pastille de poudre compactée. Une force de 5 tonnes est appliquée lors de la mesure sur un échantillon de 1,3 cm de diamètre. Dans ces conditions, la conductivité électronique mesurée est de 5.10⁻⁵ S.cm⁻¹.

### Exemple 1": Comparaison du comportement électrochimique des matériaux préparés aux exemples 1 et 1' en cellules électrochimiques.

Les matériaux préparés à l'exemple 1 et 1' ont été testés dans des piles boutons du type CR 2032 en batteries lithium polymère à 80°C. Les cathodes ont été préparées en mélangeant ensemble la poudre du matériau actif avec du noir de carbone (Ketjenblack®) pour assurer l'échange électronique avec le collecteur de courant et du poly(oxyde d'éthylène) de masse 400.000 utilisé comme agent liant d'une part et conducteur ionique d'autre part. Les proportions en poids sont 51:7:42. De l'acétonitrile est ajouté au mélange pour dissoudre le poly(oxyde d'éthylène) en quantité suffisante pour former une suspension homogène. Cette suspension obtenue est ensuite coulée sur un disque d'acier inoxydable de 1 cm2. La cathode ainsi préparée est séchée sous vide, puis transférée en boîte à gants sous atmosphère d'hélium (< 1vppm H₂O, O₂). Une feuille de lithium (27 µm d'épaisseur) laminée sur un substrat de nickel a été utilisée comme anode. L'électrolyte polymère était composé de poly(oxyde d'éthylène) de masse 5.000.000 et d'un sel de lithium de la bistrifluorisulfoninimide Li[(CF₃SO₂)₂N]) (ci-après LiTFSI) dans les proportions oxygène des unités oxyéthylène / ions lithium de 20:1.

Les expériences électrochimiques ont été menées à 80°C, température à laquelle la conductivité ionique de l'électrolyte est suffisante (2 × 10⁻³ Scm⁻¹).

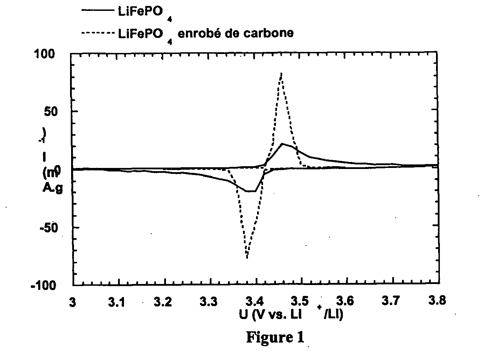

La Figure 1 montre le premier cycle obtenu par voltamétrie lente, une technique bien connue de l'homme de l'art (20 mV.h⁻¹) contrôlée par un cycleur de batterie de type Macpile® (Biologic™, Claix, France), des échantillons préparés à l'exemple 1 et 1'.

Le composé non carboné de l'exemple 1 présente les pics d'oxydo-réduction caractéristiques de LiFePO₄. La capacité échangée lors du processus de réduction représente 74 % de la valeur théorique. Les cinétiques de réaction sont lentes et la décharge s'étend jusqu'à 3 Volts. Ces limitations de capacités et de cinétiques de réactions sont couramment observées pour des échantillons de LiFePO₄ non carbonés. Le composé carboné de l'exemple 1' montre des pics d'oxydo-réduction bien définis et des cinétiques de réaction beaucoup plus rapides que ceux du matériau issu de la synthèse décrite dans l'exemple 1. La capacité atteinte en décharge est de 87 % de la valeur théorique ce qui représente une amélioration de la capacité du générateur électrochimique de 17% par rapport à celle de l'échantillon non carboné de l'exemple 1.

### Exemple 2: Synthèse de LiFePO₄ carboné en une étape à partir du phosphate de fer sous atmosphère réductrice.

LiFePO₄ carboné a été préparé par réaction réductrice de FePO₄.2H₂O et Li₂CO₃ en présence d'hydrogène. Dans une première étape, les quantités stœchiométriques des deux composés ainsi que la source de carbone (acétate de cellulose, (teneur de 39,7 % en poids d'acetyle, poids moléculaire moyen M_{w} de 50.000), en faible proportion (5% en poids par rapport au poids de FePO₄ 2H₂O, soit 4,2% par rapport au poids du mélange FePO₄.2H₂O et Li₂CO₃) sont broyées ensemble dans l'isopropanol. Le solvant est évaporé et le mélange soumis au traitement thermique décrit dans les exemples 1 et 1'. Durant tout le traitement thermique et également lors de la descente en température, l'atmosphère réductrice est imposée par un balayage d'un mélange de 8% d'hydrogène dans de l'argon.

La structure de l'échantillon a été vérifiée par diffraction RX et les raies correspondent à celles de la triphylite LiFePO₄ pure.

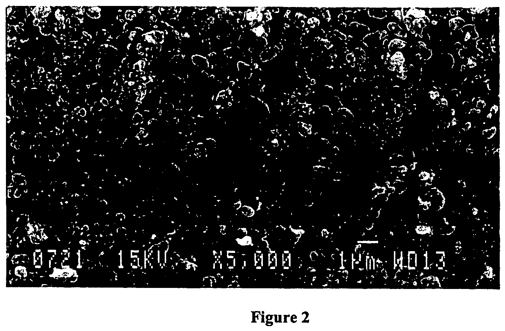

L'échantillon préparé est composé de très fines particules de l'ordre du micron (figure 2). Ces particules sont recouvertes d'une fine couche de carbone dont le poids représente 1,2% du poids total de l'échantillon, mesuré par gravimétrie après dissolution du noyau de LiFePO₄ dans l'acide chlorhydrique 2M.

Le matériau présente une conductivité électronique de surface. Cette dernière a été mesurée suivant la procédure décrite dans l'exemple 1'. Dans ces conditions, la conductivité électronique mesurée est de 2.10⁻³ S.cm⁻¹.

Compte tenu de la quantité résiduelle de carbone dans l'échantillon, le rendement de carbonisation de l'acétate de cellulose lors de cette synthèse est de 20%. Il est important de noter que ce rendement est identique à celui obtenu dans l'exemple 1' où la triphylite LiFePO₄ est déjà formée et ne nécessite aucune étape de réduction. Il est donc évident que le carbone issu de la décomposition de l'acétate de cellulose n'est pas consommé et n'intervient pas dans la réaction de réduction du fer III en fer II. Cette réduction se fait donc par l'intermédiaire de la phase gazeuse.

### Exemple 2' Comparaison du comportement électrochimique de la triphylite LiFePO₄ carbonée préparée à l'exemple 1 avec celui d'un échantillon de triphylite carboné synthétisé par une autre voie.

Le matériau préparé à l'exemple 2 a été testé dans des piles boutons du type CR 2032 décrites dans l'exemple 1". Pour comparaison, nous rapportons également quelques résultats obtenus pour le meilleur échantillon carboné synthétisé à partir de fer II (vivianite Fe₃(PO₄)₂.8H₂O) et dont la synthèse a été décrite antérieurement dans CA-A-2.270.771.

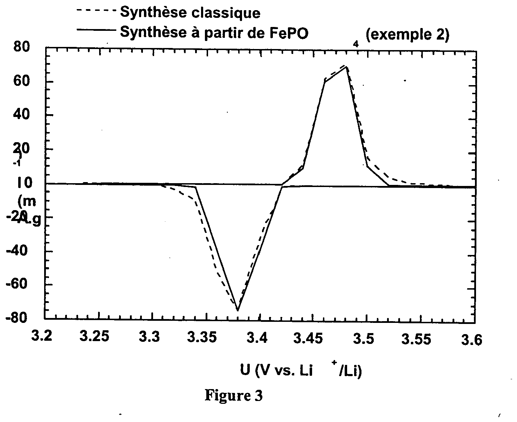

La Figure 3 présente le 5ème cycle obtenu par voltammétrie lente (20 mV.h⁻¹) contrôlée par un cycleur de batterie de type Macpile® avec l'échantillon issu de la synthèse classique (traits pointillés) d'une part et avec celui obtenu exemple 2 (traits pleins) d'autres parts. Les deux synthèses conduisent à des échantillons ayant le même comportement électrochimique sur le plan des potentiels d'oxydoréduction et des cinétiques électrochimiques.

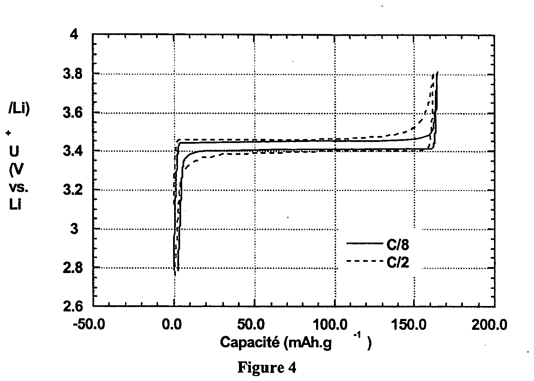

Les profils de charge et de décharge de batteries assemblées avec l'échantillon issu de la synthèse décrite dans l'exemple 2 sont présentés Figure 4 pour deux régimes. Ces résultats sont obtenus en mode galvanostatique entre 2,8 et 3,8 Volts pour deux vitesses de charge et décharge C/8 et C/2 (le courant imposé (exprimé en mA) lors de la charge ou de la décharge correspond à 1/8 (respectivement 1/2) de la capacité théorique de la batterie exprimées en mAh). Nous avons rapporté le 20 ème cycle et dans les deux cas le plateau de décharge est plat et les capacités mises en jeux correspondent à 95 % de la capacité théorique.

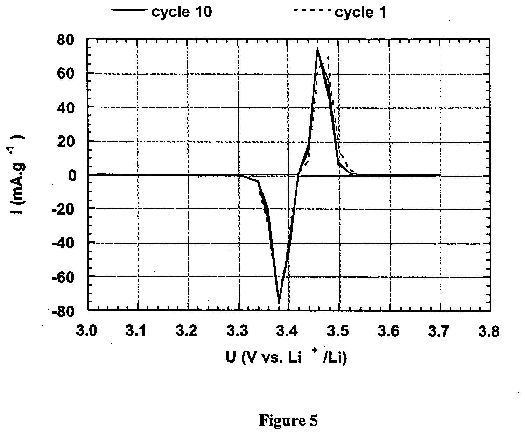

L'évolution des capacités observées en décharge lors du cyclage lors de la décharge est représentée Figure 5. Dans les deux cas, la capacité initiale est d'environ 80 % de la capacité théorique mais, après une dizaine de cycles, elle est supérieure à 95 % c'est-à-dire à 160 mAh.g⁻¹, et reste stable sur la durée de l'expérience. Ces résultats sont comparables à ceux obtenus avec la synthèse classique (réaction du phosphate de fer divalent (vivianite) avec le phosphate de lithium).

### Exemple 3 : Contrôle de la quantité de carbone

Des échantillons de triphylite avec différentes teneurs en carbone ont été préparés par réaction de FePO₄.2H₂O et Li₂CO₃ en présence d'un mélange CO/CO₂ 1/1 en volume. Cette atmosphère a été choisie pour son pouvoir réducteur vis à vis du fer III, tout en maintenant une stabilité du fer II en particulier en fin du cycle de montée en température de synthèse à 700 °C. Dans une première étape, les quantités stœchiométriques des deux composés ainsi que l'acétate de cellulose sont broyées ensemble dans l'isopropanol. Les quantités d'acétate de cellulose ajoutées représentent 2, 4 et 5 % respectivement du poids du mélange. Après séchage ces mélanges sont chauffés progressivement (6 °C par minute jusqu'à 700°C) dans un four tubulaire sous balayage du gaz réducteur (CO/CO₂ : 1/1). Cette température est maintenue pendant une heure. L'échantillon est refroidi en 40 minutes soit avec une vitesse de refroidissement d'environ 15 °C par minute. Durant tout le traitement thermique et également y compris lors de la descente en température, le flux de gaz réducteur est maintenu. La durée totale du traitement thermique est d'environ 3 heures et demie.

La structure des échantillons a été vérifiée par diffraction RX et les raies correspondent dans tous les cas à celles de la triphylite LiFePO₄ pure.
Les teneurs de carbones ont été déterminées par analyse élémentaire. Les résultats ainsi que les conductivités électroniques des échantillons sont reportées dans le tableau 1.

**Tableau 1**

| % acetate cellulose | Teneur en C | Rendement (C) | conductivité |
|---|---|---|---|
| 2 | 0,62 | 0,22 | 2.10⁻⁶ S.cm⁻¹ |
| 4 | 1,13 | 0,2 | 1.10⁻³ S.cm⁻¹ |
| 5 | 1,35 | 0,19 | 4.10⁻² S.cm⁻¹ |

Dans les trois cas le rendement de carbonisation (rendement (C) du tableau 1 de l'acétate de cellulose est proche de 20%.

La quantité de carbone résiduelle influe de façon importante sur la conductivité électronique.

Comme on peut le noter, les quantités de carbone conducteur sont proportionnelles à la quantité de précurseur ajouté (acétate de cellulose). Ceci démontre d'une manière formelle que le carbone conducteur ne participe pas à la réduction du Fer (III) en présence d'atmosphère gazeuse réductrice, cette dernière réduisant le composé du fer avec une cinétique plus rapide.

### Exemple 3' - Comparaison du comportement électrochimique des échantillons de triphylite carbonée préparée à l'exemple 3.

Les matériaux préparés à l'exemple 3 ont été testés dans des piles boutons du type CR 2032 décrites dans l'exemple 1".

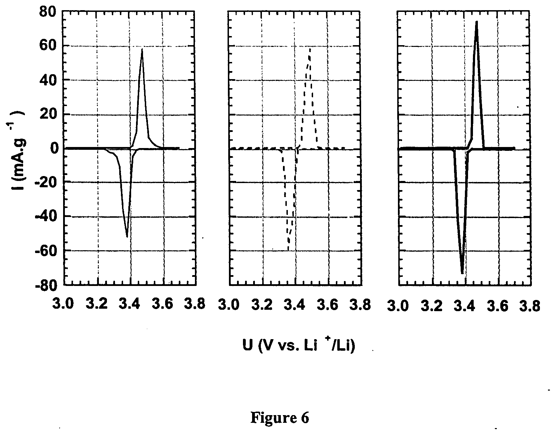

La Figure 6 présente le 5ème cycle obtenu par voltammétrie lente (20 mV.h⁻¹) contrôlée par un cycleur de batterie de type Macpile® avec :
l'échantillon contenant 0,62% en carbone (traits pleins)
l'échantillon contenant 1,13% en carbone (traits pointillés)
l'échantillon contenant 1,35% de carbone (traits gras)

Les principales caractéristiques du comportement électrochimique de ces échantillons sont résumées dans le tableau 2 suivant :

**Tableau 2**

| | | | |
|---|---|---|---|
| % carbone | 0,62 | 1,13 | 1,35 |
| Capacité (mAh.g⁻¹) | 150 | 160 | 163 |
| % capacité théorique | 88 | 94 | 96 |
| I pic (mA) | 52 | 60 | 73 |

La quantité de carbone résiduelle influe de façon significative sur la capacité des échantillons. De plus, l'augmentation du courant de pic avec le taux de carbone traduit une amélioration des cinétiques de réaction. Cette dernière reflète l'augmentation de la conductivité électronique avec le taux de carbone explicité à l'exemple 3.

La voie de synthèse décrite dans l'exemple 3 permet de contrôler de façon fiable et reproductible le taux de carbone dans le matériau final. Ce qui est primordiale compte tenu de l'influence du taux de carbone sur les propriétés électrochimiques.

### Exemple 4 et 4' (Démonstration du pouvoir d'enrobage de l'additif carbone de type polyéthylène et du contrôle de la taille des particules par l'enrobage)

### Exemple 4

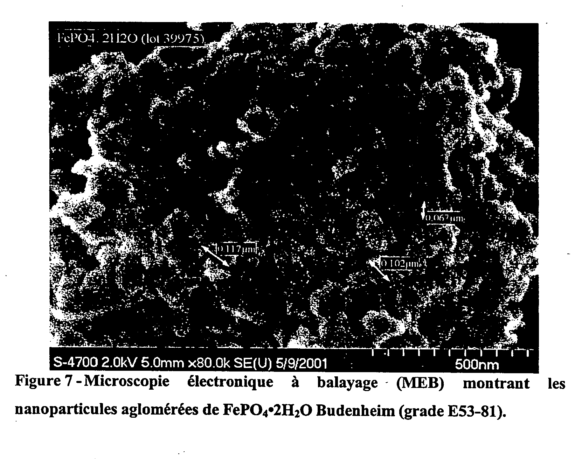

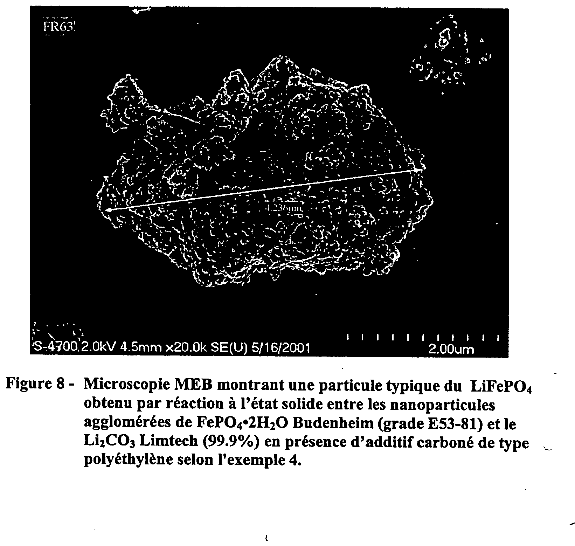

LiFePO₄ est synthétisé par réaction à l'état solide entre FePO₄·2H₂O (Budenheim grade E53-81) et Li₂CO₃ (Limtech 99.9%) en présence d'un additif de carbone de type polyéthylene-block-poly(éthylène glycol) 50% oxyde d'éthylène(Aldrich) ayant une masse molaire de 1400 dissout dans l'eau. Les particules de phosphate ferrique dihydrate (Figure 7) ont entre 0.1 µm et 6µm de diamètre. Elles sont constituées d'agglomérats de nano particules de l'ordre de 50nm à 100nm. Le phosphate ferrique est mélangé à du carbonate de lithium et dispersé dans l'eau. La fraction de copolymère block ajouté représente 3% p/p de la masse de phosphate et de carbonate utilisé. Les précurseurs sont dispersés dans un broyeur à billes puis séché à l'aide d'un atomiseur de marque Niro. 200g de mélange sont introduit dans un four rotatif en lot de marque Linder balayé par 51pm d'un mélange de CO/CO₂ 1 :1 molaire . La phase gazeuse CO/CO₂ 1:1 molaire en équilibre avec le fer(II) assure la réduction du phosphate ferrique en triphylite. La température monte graduellement de 20°C à 700°C en 90 minutes puis elle est maintenue à 700°C pendant 60 minutes. L'échantillon est ensuite refroidi de 700°C à la température ambiante en 30 minutes. Le LiFePO₄ obtenu à partir d'agglomérats de nano particules de FePO₄·2H₂O dispersées en présence d'additif carboné est présenté à la Figure 8. Le LiFePO₄ conserve sensiblement la forme et la taille initiale des particules de phosphate ferrique. L'enrobage de carbone produit par la pyrolyse de l'additif carboné supprime totalement le frittage et permet de contrôler la morphologie du produit final. Comme dans les exemples précédents, l'enrobage de carbone améliore la conductivité électronique du LiFePO₄ contenant 1% de carbone déterminé par analyse élémentaire.

### Exemple 5 Synthèse de particules denses

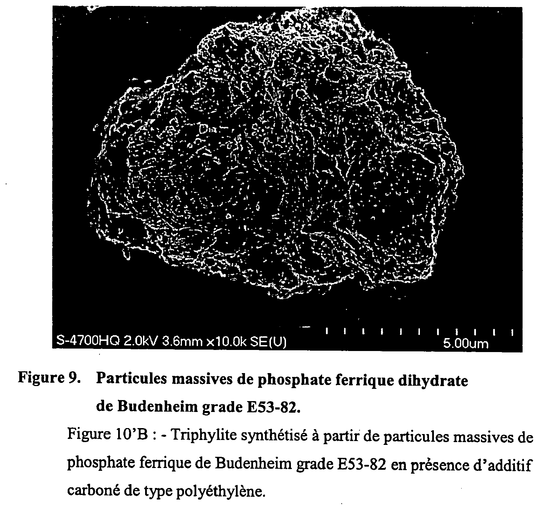

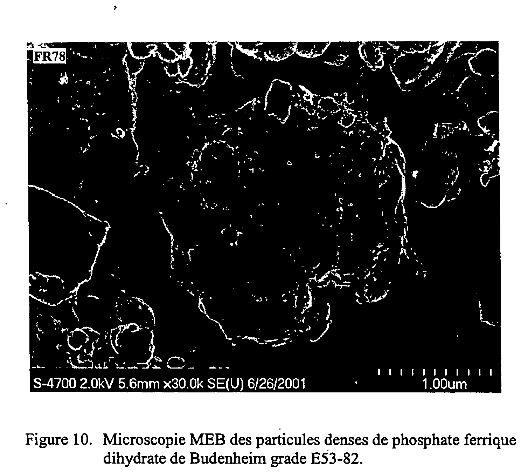

LiFePO₄ est synthétisé par réaction à l'état solide entre FePO₄·2H₂O (Budenheim grade E53-82) et Li₂CO₃ (Limtech 99.9%) en présence d'un additif de carbone de type polyéthylene-block-poly(éthylène glycol) 50% oxyde d'éthylène(Aldrich) ayant une masse molaire de 1400 est dissout dans l'eau. Les particules denses de phosphate ferrique dihydrate (Figure 9) ayant entre 0,1 µm et 20µm sont mélangé à du carbonate de lithium et broyées dans l'eau. La fraction de copolymère block ajouté représente 3% p/p de la masse de phosphate et de carbonate utilisés. Les précurseurs sont broyées dans un broyeur à billes puis séchés à l'aide d'un atomiseur de marque Niro. Le mélange est introduit dans un four rotatif en lot de marque Linder balayé par 5 1pm d'un mélange de CO/CO₂ 1 :1 molaire . La phase gazeuse CO/CO₂ 1:1 molaire en équilibre avec le fer(II) assure la réduction du phosphate ferrique en triphylite. La température monte graduellement de 20°C à 700°C en 90 minutes puis elle est maintenue à 700°C pendant 60 minutes. L'échantillon est ensuite refroidie de 700°C à la température ambiante en 30 minutes. Le LiFePO₄ obtenu à partir du FePO₄·2H₂O dense broyé en présence d'additif carboné est présenté à la Figure 10. L'analyse élémentaire indique qu'il contient 1.2% C.

Par comparaison, la morphologie typique du LiFePO₄ de la Figure 10 est plus dense et moins poreuse que le LiFePO₄ de la Figure 8 et retient sensiblement la forme et la taille des particules du précurseur FePO₄ 2H₂O), illustré à la Figure 9. Les produits de réaction des exemples 4 et 5 ont une granulométrie apparente moyenne similaire principalement constituées de particules ayant entre 0,1µm et 6µm de diamètre qui diffèrent par leur densité plus ou moins poreuse dépendant des précurseurs de départ. Les additifs carbonés de type polyéthylène enrobent les grains de phosphate ferrique lors du séchage par atomisation. Lors du traitement thermique, l'additif carboné pyrolyse et enrobe les particules d'une fine couche de carbone. Cette couche de carbone supprime totalement le frittage conservant ainsi la forme et la taille initiale du phosphate ferrique du mélange de précurseur après broyage avec le carbonate de lithium. L'additif carboné permet de contrôler l'agglomération du LiFePO₄ final en supprimant le frittage lors du traitement thermique. Les particules formées à partir de phosphate ferrique dense présentent une compacité plus élevées et permet la fabrication d'électrodes denses ("loading"). Par électrode dense on entends ici une grande quantité de matière active (LiFePO₄) par unité volumique. Comme dans les exemples précédents, l'enrobage de cette fine couche de carbone améliore la conductivité électronique du produit et augmente les performances électrochimiques de l'électrode composite.

### Exemple 6 - Comparaison du comportement électrochimique des matériaux préparés aux exemples 4 et 5 en cellules électrochimiques.

Les matériaux préparés aux exemples 4 et 5 ont été testés dans des piles boutons du type CR 2032 en batteries lithium polymère à 80°C. Les cathodes ont été préparées en mélangeant ensemble la poudre du matériau actif avec du noir de carbone (Ketjenblack®) pour assurer l'échange électronique avec le collecteur de courant et du poly(oxyde d'éthylène) de masse 400.000 utilisé comme agent liant d'une part et conducteur ionique d'autre part: Les proportions en poids sont 51:7:42. De l'acétonitrile est ajouté au mélange pour dissoudre le poly(oxyde d'éthylène) en quantité suffisante pour former une suspension homogène. Cette suspension obtenue est ensuite coulé sur un disque d'acier inoxydable de 1,cm². La cathode ainsi préparée est séchée sous vide, puis transférée en boîte à gants sous atmosphère d'hélium (< 1ppm H₂O, O₂). Une feuille de lithium (27 µm) laminée sur un substrat de nickel a été utilisée comme anode. L'électrolyte polymère était composé de poly(oxyde d'éthylène) de masse 5.000.000 et de sel de lithium de la bistrifluorisulfoninimide Li[(CF₃SO₂)₂N]) (ci-après LiTFSI) dans les proportions oxygène des unités oxyéthylène / ions lithium de 20:1.
Les expériences électrochimiques ont été menées à 80°C, température à laquelle la conductivité ionique de l'électrolyte est suffisante (2 × 10⁻³ Scm⁻¹).

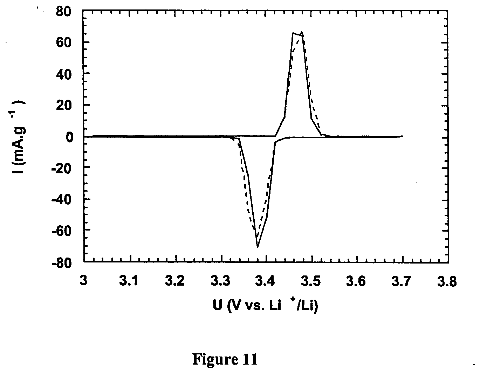

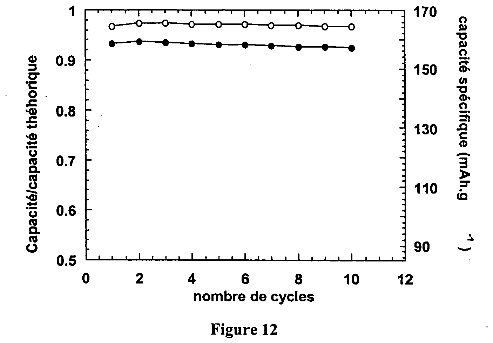

La Figure 11 montre le premier cycle obtenu par voltamétrie lente, une technique bien connue de l'homme de l'art (20 mV.h⁻¹) contrôlée par un cycleur de batterie de type Macpile® (Biologie™, Claix, France) des échantillons préparés aux exemples 4 et 5 avec un ipic d'environ 70mA/g. Le deux échantillons présentent d'excellentes performances électrochimiques en cyclage, voir Figure 12.

### Exemple 7 : - Production continue en four rotatif électrique

On mélange le phosphate ferrique dihydrate (FePO₄·2H₂O) de Budenheim (grade E53-81) (Figure 7) en quantité stœchiométrique avec le carbonate de lithium (Li₂CO₃) de Limtech (99.9%) à l'aide d'un broyeur à billes dans l'eau. Le phosphate ferrique dihydrate se présente sous forme de poudre fine ayant des particules élémentaires entre 0,1µm et 6µm de diamètre. Ces particules élémentaires sont formées d'agglomérats de nano particules. Du copolymère polyéthylene-block-poly(éthylène glycol) tel que décrit à l'exemple 4 est ajouté comme additif de carbone améliorant la conductivité du produit final par pyrolyse lors du traitement thermique du mélange de précurseur. La masse de copolymère block équivaut à 3% p/p de la quantité de phosphate ferrique et de carbonate de lithium. Les quantités suivantes de réactifs sont utilisées :

| | | |
|---|---|---|
| FePO₄·2H₂O (Budenheim grade E53-81) | = | 40 kg |
| Li₂CO₃ (Limtech 99.9%) | = | 7.91 kg |
| *Copolymère PE*/*POE* | = | *1.44 kg* |
| Eau déminéralisée | = | 40 litres |

Le mélange est séché à l'aide d'un atomiseur de marque Niro puis alimenté dans un four rotatif de marque ABB-Raymond. Le four rotatif a 16.5cm de diamètre par 3m de long. Le mélange de précurseurs est alimenté à raison de 1.4 kg/h afin d'obtenir une production d'environ 1kg/h de LiFePO₄ pendant une période de 34 heures. Le débit de précurseurs est ajusté afin que le pourcentage de remplissage du four n'excède pas 8% du volume interne du four assurant ainsi l'uniformité du brassage et de l'échange avec la phase gazeuse lors du traitement thermique. Un mélange gazeux en équilibre avec le fer(II) est introduit dans le four à contre-courant du mélange de précurseurs. La réduction du fer(III) en fer (II) est conduite par du CO/CO₂ dilué dans l'azote dans les proportions suivantes :
3 lpm de CO
2.4 1pm de CO₂
15 1pm de N₂

Le four rotatif tourne à 2 rpm avec un angle de 1°. Le mélange entre dans la zone froide à 200°C puis monte à 700°C en 80 minutes (6.3°C/minutes). Le produit calciné reste à 700°C pendant 40 minutes puis refroidie de 700°C à la température ambiante en 40 minutes. Le produit récupéré contient 0.9% de carbone produit par la pyrolyse du polymère à base de polyéthylène. Une analyse RX confirme que le produit est de la triphylite. Les particules élémentaires de 0,1 µm à 6 µm ont un diamètre moyen (d₅₀) d'environ 2µm. Elles sont formées d'agglomérats de nano particules de quelques dizaines de nanomètres semblable au produit de départ. Les nano particules partiellement frittées favorisent une bonne densité de courant par leur grande surface spécifique. De plus l'enrobage de carbone favorise une conductivité électronique élevée, critère essentielle à la fabrication d'électrode présentant une densité courant élevés et un rendement près du rendement théorique du LiFePO₄, i.e. 170 mAh/g.

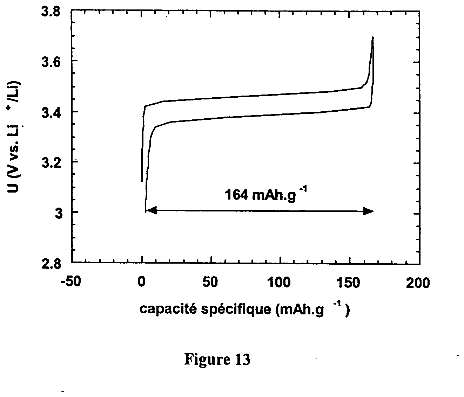

Le matériau préparé a été testé dans des piles boutons du type CR 2032 décrites dans l'exemple 6 et montre un rendement de 96%(164 mAh/g) illustré à la Figure 13.

### Exemple 8 - Gaz réducteur à partir de combustion partielle de gaz naturel

LiFePO₄ est synthétisé par réaction à l'état solide entre le FePO₄·2H₂O de Budenheim (grade E53-81) et Li₂CO₃ de Limtech (99.9%) en présence d'un additif de carbone de type polyéthylene-block-poly(éthylène glycol) 50% oxyde d'éthylène(Aldrich) ayant une masse molaire de 1400 dissout dans l'eau. Des particules de phosphate ferrique dihydrate ayant entre 0.1µm et 6µm sont mélangées à du carbonate de lithium et broyé dans l'eau. La fraction de copolymère ajouté représente 4% p/p de la masse de phosphate et de carbonate utilisé. Les précurseurs sont dispersés dans un broyeur à billes puis séché à l'aide d'un atomiseur de marque Niro. Le mélange est introduit dans un four rotatif en lot de marque Linder. Un mélange réducteur de gaz naturel partiellement brûlé en présence d'air dans un reformeur extérieur. Il est ensuite introduit dans le four à raison de 5 lpm. Le mélange gazeux est généré indépendant en mélangeant le gaz naturel (méthane) et l'air dans une proportion 1:5. L'analyse du mélange gazeux montre les concentrations suivantes; 14%H₂, 14%H₂O, 11%CO, 3%CO₂ et 58%N₂. La température monte graduellement de 20°C à 700°C en 90 minutes (7.6°C/minute) puis elle est maintenu à 700°C pendant 60 minutes. L'échantillon est ensuite refroidie de 700°C à la température ambiante en 30 minutes. Le produit obtenu est similaire à celui de la Figure 8. Une analyse RX montre la structure olivine de la triphylite. L'analyse élémentaire indique que l'échantillon contient 1.5% de carbone.

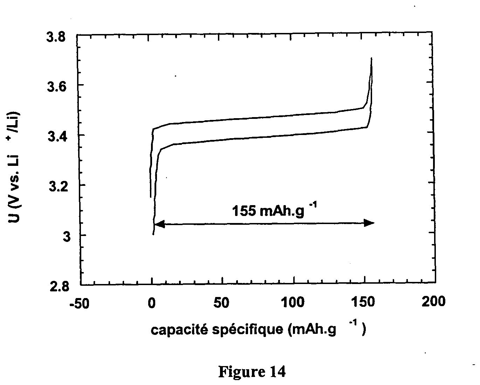

Le matériau préparé a été testé dans des piles boutons du type CR 2032 décrites dans l'exemple 6. Il montre un rendement d'environ 92%(155mAh/g), voir Figure 14.

### Exemple 9 - Gaz réducteur à partir de combustion partielle de propane

On synthétise le LiFePO₄ par réaction à l'état solide entre le phosphate ferrique dihydrate Budenheim (grade E53-81) et le carbonate de lithium (Limtech 99.9%). Les deux précurseurs sont mélangés en quantités stœchiométriques puis dispersés dans l'eau à l'aide d'un broyeur à billes. Un additif carboné de type polyéthylene-block-poly(éthylène glycol) soluble dans l'eau est ajouté dans le mélange lors du broyage. La fraction de copolymère ajouté représente 4% p/p de la masse de phosphate et de carbonate utilisé. Cet additif carbonisera lors du traitement thermique du mélange et déposera une mince couche de carbone à la surface des particules.

Pour cet exemple, les quantités suivantes de réactifs sont utilisées :

| | | |
|---|---|---|
| FePO₄·2H₂O (Budenheim E53-81) | = | 100 kg |
| Li₂CO₃ (Limtech 99.9%) | = | 19.78 kg |
| *Copolymère PE*/*POE* | = | *4.79 kg* |
| Eau déminéralisée | = | 100 litres |

Le mélange dispersé de manière très homogène à l'aide d'un broyeur à billes horizontal contenant des billes d'acier de 2mm de diamètre est séché par un atomiseur ("spray-dryer") de marque Niro. Il est ensuite alimenté dans un four rotatif au gaz propane ("direct fired rotary kiln") de marque Bartlett & Snow. Le four a 38.1cm de diamètre intérieur par 4m80 de longueur intérieur. Le mélange de précurseur est alimenté à contre courant du gaz dans le four tournant à 3 rpm avec un angle de 1°. L'atmosphère en équilibre avec le fer(II) est généré in situ par la combustion partielle du propane alimenté dans le brûleur de 500000 BTU. Pour chaque mole de gaz propane injecté dans le four, 13 moles d'air (équivalent à 2.75 moles d'oxygènes) sont injectées afin de brûler partiellement le gaz et générer une atmosphère réductrice permettant la réduction du phosphate ferrique en triphylite. La composition chimique de la phase gazeuse générée in situ est de 13.6% CO, 3.2% CO₂, 12% H₂, 11.2% H₂O et 60% N₂.

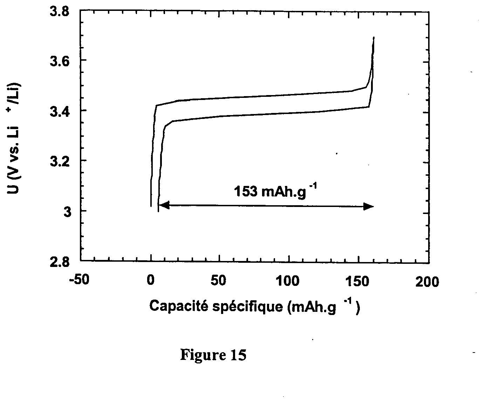

Le mélange est alimenté à 5kg/h pendant 25 heures. Il entre dans le four à environ 200°C puis monte graduellement jusqu'à environ 700°C à 5°C/minutes afin de favoriser une réaction complète des précurseurs. Le produit reste environ 15 minutes à environ 700°C. Le LiFePO₄ se présente sous forme de fine poudre noire non agglomérées contenant 1.5% de carbone produit par la pyrolyse de l'additif de carbone de type polyéthylène. La fraction de carbone est obtenu par analyse élémentaire.
Le matériau préparé à l'exemple 9 a été testé dans des piles boutons du type CR 2032 décrites dans l'exemple 6. La Figure 15 montre que le matériau à un rendement de 90% avec un ipic d'environ 75mAh/g.

### Exemple 10: - préparation de LiFe_{0.5}Mn_{0.5}PO₄ sous atmosphère réductrice.

LiFe_{0.5}Mn_{0.5}PO₄ a été préparé en mélangeant les quantités stoechiométriques de LiH₂PO₄, FeC₂O₄.2H₂O et (CH₃COO)₂Mn.4H₂O. Ces composés sont broyés dans l'heptane. Après séchage le mélange est chauffé progressivement jusqu'à 400°C sous air pour décomposer les groupements acétates et oxalates. Cette température est maintenue pendant 8 heures. Au cours de ce traitement, le fer II s'oxyde en fer III. Le mélange est ensuite rebroyé dans une solution d'acétone contenant le précurseur de carbone (acétate de cellulose 39.7% en poids de groupements acétyls) 5 % en poids par rapport au mélange). Après séchage, le mélange est traité thermiquement sous un balayage de CO/CO₂ 1/1 suivant le protocol décrit à l'exemple 3.

Le composé final contient 0.8 % en carbone. Sa conductivité électronique est de 5.10⁻⁴ S.cm⁻¹ mesuré selon la technique décrite à l'exemple 1. Le comportement électrochimique de l'échantillon LiFe_{0.5}Mn_{0.5}PO₄ a été évalué à température ambiante en batterie lithium contenant un électrolyte liquide.

Les cathodes sont constituées d'un mélange de matière active, de noir de carbone, et d'un agent liant (PVDF en solution dans la N-méthyl pyrolidone) dans les proportions 85 :5 :10. La composite est étendue sur un collecteur de courant en aluminium. Après séchage, des électrodes de 1,3 cm² et d'une capacité d'environ 1,6 mAh sont découpées à l'emporte-pièce. Les batteries sont assemblées en boîte à gants, sous atmosphère inerte.

Les mesures ont été réalisées dans un électrolyte contenant LiClO₄ 1M dans un mélange EC : DMC 1 : 1. L'anode est constituée de lithium. Les tests sont réalisés à température ambiante.

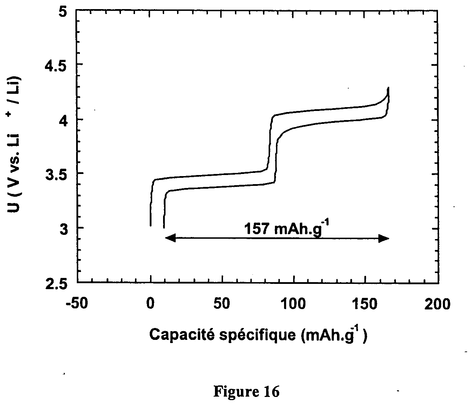

La Figure 16 présente les courbes de charge et de décharge d'une batterie cyclée en mode galvanostatique entre 3 et 4.3 Volts. Les régimes de charge et de décharge imposés correspondent à C/24 (la batterie est chargée en 24 heures puis déchargée pendant la même durée)

La courbe de décharge possède deux plateaux : le premier vers 4V correspond à la réduction du Manganèse III en manganèse II, et le deuxième vers 3.4 V correspond à la réduction du fer III en fer II. La capacité spécifique obtenu durant la décharge est 157 mAh.g⁻¹, ce qui correspond à 92% de la capacité théorique.

### Exemple: 11 - :

On produit le composé C-LiₓM_{1-y}M'_{y}(XO₄)ₙ en partant d'une poudre de fer de taille de quelques microns, de LiH₂PO₄ et de l'additif carbone (copolymère) conducteur tel qu'utilisé dans les exemples précédents.

Ces réactifs sont intimement mélangés par cobroyage d'une atmosphère constituée d'un mélange 1 :1 de CO/CO₂.

La présence du composé LiFePO₄ est confirmée par le diagramme de diffraction de rayons X obtenu à partir de la poudre ainsi obtenue.

### Exemple 12 Contrôle de la morphologie par l'atomisation

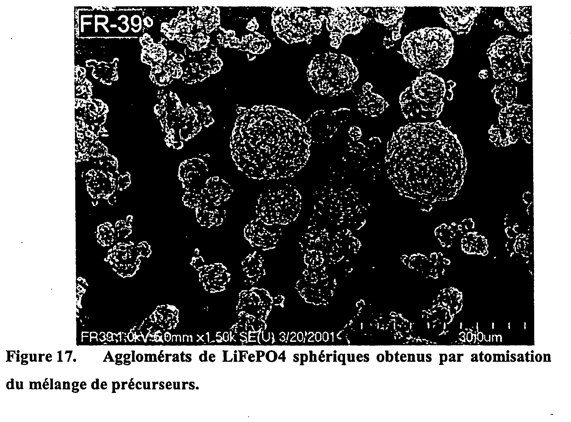

LiFePO₄ est synthétisé par réaction à l'état solide entre FePO₄·2H₂O (Budenheim grade E53-81) et Li₂CO₃ (Limtech 99.9%) en présence d'un additif carboné dérivé de la cellulose. Les particules de phosphate ferrique dihydrate ont entre 0.1µm et 6µm de diamètre. Le phosphate ferrique est mélangé à du carbonate de lithium et dispersé dans l'eau. Un additif de carbone de type hydroxyethyl cellulose (Aldrich) est dissous dans l'eau. La fraction de cellulose ajoutée représente 6% p/p de la masse de phosphate et de carbonate utilisé. Les précurseurs sont dispersés dans un broyeur à billes puis séchés à l'aide d'un atomiseur laboratoire de marque Buchi équipé d'une buse sous pression. Le mélange est introduit dans un four rotatif en lot de marque Linder balayé par un mélange de CO/CO₂ 1 :1 molaire . La phase gazeuse CO/CO₂ 1:1 molaire en équilibre avec le fer(II) assure la réduction du phosphate ferrique en triphylite. La température monte graduellement de 20°C à 700°C en 90 minutes puis elle est maintenue à 700°C pendant 60 minutes. L'échantillon est ensuite refroidi de 700°C à la température ambiante en 30 minutes. Le LiFePO₄, obtenu à partir de FePO₄·2H₂O et de Li₂CO₃ dispersées et séché par atomisation en présence d'additif carboné dérivé de la cellulose, est présenté à la Figure 17. On constate que le séchage par atomisation du mélange de précurseurs permet de contrôler la taille et la morphologie du produit final. Il permet de produire des agglomérats sphériques de la taille désirée. Il est connu que l'on peut ajuster la taille des agglomérats en variant les paramètres d'atomisation tel que le type de buse (sous pression"pressure nozzle", rotative"rotary" ou bi-fluide"two-fluid"), le pourcentage solide du mélange, la viscosité et la température d'injection, etc.. L'enrobage de carbone améliore la conductivité électronique de cet échantillon de LiFePO₄ contenant 1,09% de carbone déterminé par analyse élémentaire et présentant une conductivité de 2.10⁻³S.cm⁻¹ mesuré selon la technique décrite à l'exemple 1.

Le matériau préparé a été testé dans une pile bouton du type CR 2032 décrite dans les exemples précédents. Il présente une capacité équivalente à 92% de la capacité théorique, i.e. 156 mAh/g.

### Exemple 13. Enrobage et pontage des particules de LiFePO₄ par le carbone

LiFePO₄ est synthétisé par réaction à l'état solide entre FePO₄·2H₂O (Budenheim grade E53-81) et Li₂CO₃ (Limtech 99.9%) en présence d'un mélange d'additifs carbonés. Les particules de phosphate ferrique dihydrate ont entre 0.1µm et 6µm de diamètre. Le phosphate ferrique est mélangé à du carbonate de lithium et dispersé dans l'eau. Le mélange d'additif de carbone contient du polyéthylene-block-poly(éthylène glycol) tel que décrit dans les exemples précédents, dissous dans l'isopropanol et de l'acétate de cellulose. La fraction de polyéthylene-block-poly(éthylène glycol) ajoutée représente 1% p/p de la masse de phosphate et de carbonate tandis que la fraction d'acétate de cellulose représente 4% de la masse de phosphate et de carbonate. Les précurseurs sont broyées dans un broyeur à billes puis séchés. Le mélange est introduit dans un four rotatif en lot de marque Linder balayé par un mélange de 5 lpm de CO/CO₂ 1 :1 molaire . La phase gazeuse CO/CO₂ 1:1 molaire en équilibre avec le fer(II) assure la réduction du phosphate ferrique en triphylite. La température monte graduellement de 20°C à 700°C en 90 minutes puis elle est maintenue à 700°C pendant 60 minutes. L'échantillon est ensuite refroidi de 700°C à la température ambiante en 30 minutes.

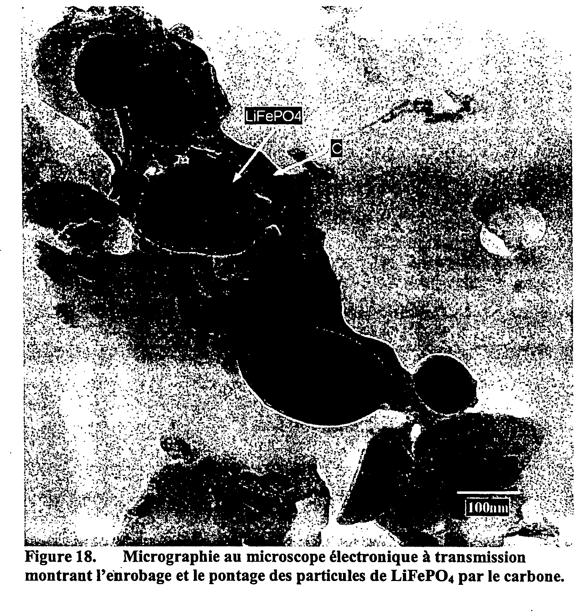

Le LiFePO₄ observé par microscopie à transmission électronique est présenté à la figure 18. Cette figure montre des particules non frittées mais enrobées et pontées par le carbone, confirmant de toute évidence le lien physique étroit entre le carbone et le LiFePO₄. Ce pontage permet de fabriquer des agglomérats de LiFePO₄ liés par le carbone. L'enrobage et le pontage par le carbone améliorent la conductivité électronique des cathodes composites fabriquées à partir de cet échantillon de LiFePO₄ contenant 1.12% de carbone déterminé par analyse élémentaire et présentant une excellente conductivité de 3.10⁻²S.cm⁻¹ mesuré selon la technique décrite à l'exemple 1.

Le matériau préparé a été testé dans une pile bouton du type CR 2032 décrite dans les exemples précédents. Il présente une capacité équivalente à 97% de la capacité théorique(164 mAh/g) avec une excellente densité de courant.

## Revendications

1. Procédé de synthèse de particules d'un oxyde complexe enrobé de carbone, ledit oxyde complexe ayant sensiblement une structure olivine et répondant à la formule LiₓM_{1-y}M'_{y}(PO₄)ₙ, dans laquelle : x, y et n sont des nombres tels que 0 ≤ x ≤ 2, 0 ≤ y ≤ 0,6, et 1 ≤ n ≤ 1,5 ; M est un métal de transition ou un mélange de métaux de transition de la première ligne du tableau périodique ; M' est un élément de valence fixe choisi parmi Mg²⁺, Ca²⁺, Al³⁺, Zn²⁺ ou une combinaison de ces mêmes éléments et P est éventuellement remplacé partiellement par au moins un élément choisi parmi Si, et S, ledit procédé étant **caractérisé en ce que** :
- la synthèse se fait par réaction de mise en équilibre, thermodynamique ou cinétique, d'un mélange dans les proportions requises de composés sources suivants :
a) une source de M
b) une source de M' lorsque y>0,
c) un composé source de lithium
d) un composé source de P et éventuellement un composé source d'un élément Si ou S;
e) une source de carbone conducteur ;
avec une atmosphère gazeuse réductrice ;
- la synthèse est effectuée en contrôlant la composition de ladite atmosphère gazeuse, la température de la réaction de synthèse et le taux du composé source c) relativement aux autres composés sources a), b) et d), pour imposer l'état d'oxydation du métal de transition au degré de valence voulu pour la constitution du composé de type LiMPO₄ ;
- la température de la synthèse est supérieure à la température à laquelle l'atmosphère réative est capable de réduire le ou les éléments de transition à leur état d'oxydation requis dans le composé LiMPO₄, la température et la durée de la synthèse sont inférieures respectivement à la température et à la durée amenant une réduction du ou des éléments de transition à l'état métallique ou une oxydation du carbone résultant de la pyrolyse de la substance organique ;
- le procédé comporte au moins une étape de pyrolyse du composé source e).

2. Procédé selon la revendication 1, **caractérisé en ce que** les particules ont une dimension de 0,05 à 30 µm.

3. Procédé selon la revendication 1 ou 2, **caractérisé en ce que** M est au moins un métal de transition choisi parmi Mn, Fe, Co et Ni.

4. Procédé selon la revendication 1 ou 2, **caractérisé en ce qu'**on utilise des précurseurs sous forme de particules dont la taille et la forme ne diffèrent pas plus de 80% de celle des particules du composé final.

5. Procédé selon la revendication 1 ou 2, **caractérisé en ce qu'**au moins une partie du ou desdits métaux de transition qui composent M se trouvent dans le composé source a) dans un état d'oxydation supérieur ou inférieur à celui du métal dans le composé final du type LiMPO₄.

6. Procédé selon la revendication 1 ou 2, **caractérisé en ce que** la réaction de synthèse entre les composés sources a) à d) est effectuée simultanément à la réaction de pyrolyse du composé source e).

7. Procédé selon la revendication 1 ou 2, **caractérisé en ce que** la réaction de pyrolyse est effectuée dans une seconde étape, consécutive à la réaction de synthèse entre les composés a) à d).

8. Procédé selon la revendication 1 ou 2, **caractérisé en ce qu'**il comprend un traitement thermique (qui inclut la réaction de formation de l'oxyde complexe, la réduction, la pyrolyse et éventuellement la déshydratation d'une ou de plusieurs sources a) à d)) ledit traitement thermique consistant en un chauffage depuis la température ordinaire jusqu'à une température comprise entre 500 et 1.100°C.

9. Procédé selon la revendication 2, **caractérisé en ce que** la source de M est également source de P et/ou la source de M' est également source de P et/ou la source de lithium est également source de P et/ou la source de P est également source de lithium.

10. Procédé selon la revendication 2, **caractérisé en ce que** M est choisi au moins en partie dans le groupe constitué par le fer, le manganèse, le cobalt et le nickel, le complément des métaux. de transition étant choisi dans le groupe constitué par le vanadium, le titane, le chrome et le cuivre.

11. Procédé selon la revendication 1 ou 2, **caractérisé en ce que** le composé source de M est l'oxyde de fer III ou la magnétite, le dioxyde de manganèse, le pentoxyde de di-vanadium, le phosphate de fer trivalent l'hydroxyphosphate de fer et de lithium ou le nitrate de fer trivalent, ou un mélange de ces derniers.

12. Procédé selon la revendication 1 ou 2, **caractérisé en ce que** le composé source de lithium est choisi dans le groupe constitué par l'oxyde ou l'hydroxyde de lithium, le carbonate de lithium, le phosphate neutre Li₃PO₄, le phosphate acide LiH₂PO₄, l'ortho, le méta ou les poly silicates de lithium, le sulfate de lithium, l'oxalate de lithium et l'acétate de lithium, ou un mélange de ces derniers.

13. Procédé selon la revendication 1 ou 2, **caractérisé en ce que** la source de P est choisie dans le groupe constitué par l'acide phosphorique et ses esters, le phosphate neutre Li₃PO₄ ou le phosphate acide LiH₂PO₄, les phosphates mono- ou di-ammonique, le phosphate de fer trivalent, le phosphate de manganèse et d'ammonium (NH₄MnPO₄), et leurs mélanges.

14. Procédé selon la revendication 1 ou 2, **caractérisé en ce que** la teneur en composé source de carbone conducteur dans le mélange de composés sources est telle que la teneur en carbone conducteur dans le milieu réactionnel soit comprise entre 0,1 et 25 % de la masse totale du mélange réactionnel.

15. Procédé selon la revendication 1 ou 2, pour la préparation de LiFePO₄, **caractérisé en ce que** le composé source de Fe est un sel de fer III.

16. Matériau constitué de particules d'un oxyde complexe enrobé de carbone, ledit oxyde complexe ayant sensiblement une structure olivine et répondant à la formule LiₓM_{1-y}M'_{y}(PO₄)ₙ, dans laquelle : x, y et n sont des nombres tels que 0 ≤ x ≤ 2,0 ≤ y ≤ 0,6, et 1 ≤ n ≤ 1,5 ; M est un métal de transition ou un mélange de métaux de transition de la première ligne du tableau périodique ; M' est un élément de valence fixe choisi parmi Mg²⁺, Ca²⁺, Al³⁺, Zn²⁺ ou une combinaison de ces mêmes éléments et P est éventuellement remplacé partiellement par au moins un élément choisi parmi Si, et S, ledit matériau étant obtenu sous forme de particules ayant une dimension de 0,05 à 30 µm, par synthèse sous atmosphère réductrice.

17. Matériau selon la revendication 16, **caractérisé en ce que** M est au moins un métal de transition choisi parmi Mn, Fe, Co et Ni.

18. Matériau selon la revendication 16, **caractérisé en ce qu'**il est constitué d'agglomérats sphériques de taille comprise entre 1 et 30 µm, lesdits agglomérats étant constitués de particules plus petites.

19. Matériau selon la revendication 16, **caractérisé en ce qu'**il est constitué d'agglomérats sphériques de taille comprise entre 1 et 20 µm, lesdits agglomérats étant constitués de particules plus petites liées entre elles par du carbone, la teneur en carbone étant inférieure à 7% par rapport à la masse d'oxyde complexe.

20. Matériau selon la revendication 16, **caractérisé en ce qu'**il a une conductivité électronique, mesurée sur un échantillon de poudre compactée à une pression de 3000 kg.cm⁻², supérieure à 10⁻⁸ S.cm⁻¹.

21. Cellule électrochimique comprenant au moins deux électrodes et au moins un électrolyte, **caractérisée en ce qu'**au moins une de ses électrodes comprend ledit matériau selon la revendication 16.

## Patentansprüche

1. Verfahren zum Synthetisieren von Partikeln eines kohlenstoffbeschichteten komplexen Oxids, wobei das komplexe Oxid im Wesentlichen eine Olivinstruktur aufweist und der Formel LiₓM_{1-y}M'_{y}(PO₄)ₙ entspricht, wobei: x, y und n solche Zahlen sind, dass 0 ≤ x ≤ 2, 0 ≤ y ≤ 0,6 und 1 ≤ n ≤ 1,5; M ein Übergangsmetall oder eine Mischung von Übergangsmetallen aus der ersten Reihe des Periodensystems ist; M' ein Element mit fester Valenz ist, das aus Mg²⁺, Ca²⁺, Al³⁺, Zn²⁺ oder einer Kombination daraus ausgewählt ist, und P gegebenenfalls teilweise durch mindestens ein Element ersetzt ist, das aus Si und S ausgewählt ist, wobei das Verfahren **dadurch gekennzeichnet ist, dass**:
- die Synthese durch eine thermodynamische oder kinetische Gleichgewichtsreaktion einer Mischung mit den erforderlichen Anteilen der folgenden Ausgangsverbindungen:
a) Ausgangsverbindung von M;
b) Ausgangsverbindung von M', wenn y > 0;
c) Ausgangsverbindung von Lithium;
d) Ausgangsverbindung von P und gegebenenfalls eine Ausgangsverbindung eines Si- oder S-Elements;
e) Ausgangsverbindung von leitfähigem Kohlenstoff;
mit einer reduzierenden Gasatmosphäre erfolgt;
- die Synthese unter Kontrollieren der Zusammensetzung der Gasatmosphäre, der Temperatur der Synthesereaktion und des Anteils der Ausgangsverbindung c) im Verhältnis zu den anderen Ausgangsverbindungen a), b) und d) durchgeführt wird, um den Oxidationszustand des Übergangsmetalls auf den für die Bildung der Verbindung vom Typ LiMPO₄ gewünschten Valenzgrad zu bringen;
- die Synthesetemperatur höher als die Temperatur ist, bei der die reaktive Atmosphäre in der Lage ist, das (die) Übergangselement(e) in der LiMPO₄-Verbindung auf seinen (ihre) erforderliche(n) Oxidationszustand (Oxidationszustände) zu reduzieren, die Temperatur und die Dauer der Synthese geringer sind als die Temperatur bzw. die Dauer, die zu einer Reduktion des (der) Übergangselement(e) in den metallischen Zustand oder zu einer Oxidation des aus der Pyrolyse der organischen Substanz resultierenden Kohlenstoffs führen;
- das Verfahren mindestens einen Schritt der Pyrolyse der Ausgangsverbindung e) umfasst.

2. Verfahren nach Anspruch 1, **dadurch gekennzeichnet, dass** die Partikel eine Größe von 0,05 bis 30 µm haben.

3. Verfahren nach Anspruch 1 oder 2, **dadurch gekennzeichnet, dass** M mindestens ein Übergangsmetall ist, das aus Mn, Fe, Co und Ni ausgewählt ist.

4. Verfahren nach Anspruch 1 oder 2, **dadurch gekennzeichnet, dass** Vorläufer in Form von Partikel verwendet werden, deren Größe und Form sich nicht um mehr als 80 % von denen der Partikel der Endverbindung unterscheiden.

5. Verfahren nach Anspruch 1 oder 2, **dadurch gekennzeichnet, dass** mindestens ein Teil des oder der Übergangsmetalle, die M bilden, sich in der Ausgangsverbindung a) in einem höheren oder niedrigeren Oxidationszustand als das Metall der Endverbindung vom Typ LiMPO₄ vorliegt.

6. Verfahren nach Anspruch 1 oder 2, **dadurch gekennzeichnet, dass** die Synthesereaktion zwischen den Ausgangsverbindungen a) bis d) gleichzeitig mit der Pyrolysereaktion der Ausgangsverbindung e) durchgeführt wird.

7. Verfahren nach Anspruch 1 oder 2, **dadurch gekennzeichnet, dass** die Pyrolysereaktion in einem zweiten Schritt nach der Synthesereaktion zwischen den Ausgangsverbindungen a) bis d) durchgeführt wird.

8. Verfahren nach Anspruch 1 oder 2, **dadurch gekennzeichnet, dass** es eine Wärmebehandlung (die die Reaktion zur Bildung des komplexen Oxids, die Reduktion, die Pyrolyse und gegebenenfalls die Dehydratisierung einer oder mehrerer Ausgangsverbindungen a) bis d) einschließt) umfasst, wobei die Wärmebehandlung aus Erhitzen von der Umgebungstemperatur auf eine Temperatur zwischen 500 und 1100°C besteht.

9. Verfahren nach Anspruch 2, **dadurch gekennzeichnet, dass** die Ausgangsverbindung von M auch eine Ausgangsverbindung von P ist und/oder die Ausgangsverbindung von M' auch eine Ausgangsverbindung von P ist und/oder die Ausgangsverbindung von Lithium auch eine Ausgangsverbindung von P ist und/oder die Ausgangsverbindung von P auch eine Ausgangsverbindung von Lithium ist.

10. Verfahren nach Anspruch 2, **dadurch gekennzeichnet, dass** M zumindest teilweise ausgewählt ist aus der Gruppe bestehend aus Eisen, Mangan, Kobalt und Nickel, und der Rest der Übergangsmetalle ausgewählt ist aus der Gruppe bestehend aus Vanadium, Titan, Chrom und Kupfer.

11. Verfahren nach Anspruch 1 oder 2, **dadurch gekennzeichnet, dass** die Ausgangsverbindung von M Eisen-III-Oxid oder Magnetit, Mangandioxid, Divanadiumpentoxid, dreiwertiges Eisenphosphat, Eisen- und Lithiumhydroxyphosphat oder dreiwertiges Eisennitrat oder eine Mischung davon ist.

12. Verfahren nach Anspruch 1 oder 2, **dadurch gekennzeichnet, dass** die Ausgangsverbindung von Lithium ausgewählt ist aus der Gruppe bestehend aus Lithiumoxid oder -hydroxid, Lithiumcarbonat, neutralem Phosphat Li₃PO₄, saurem Phosphat LiH₂PO₄, Lithium-ortho-, -meta- oder -polysilikaten, Lithiumsulfat, Lithiumoxalat und Lithiumacetat oder einer Mischung davon.

13. Verfahren nach Anspruch 1 oder 2, **dadurch gekennzeichnet, dass** die Ausgangsverbindung von P ausgewählt ist aus der Gruppe bestehend aus Phosphorsäure und deren Estern, neutralem Phosphat Li₃PO₄ oder saurem Phosphat LiH₂PO₄, Mono- oder Diammoniumphosphaten, dreiwertigem Eisenphosphat, Mangan- und Ammoniumphosphat (NH₄MnPO₄) und Mischungen davon.

14. Verfahren nach Anspruch 1 oder 2, **dadurch gekennzeichnet, dass** der Gehalt der Ausgangsverbindung von leitfähigem Kohlenstoff in der Mischung der Ausgangsverbindungen so ist, dass der Gehalt an leitfähigem Kohlenstoff in der Reaktionsumgebung zwischen 0,1 und 25 % der Gesamtmasse der Reaktionsmischung beträgt.

15. Verfahren nach Anspruch 1 oder 2 zur Herstellung von LiFePO₄, **dadurch gekennzeichnet, dass** die Fe-Ausgangsverbindung ein Eisen-III-Salz ist.

16. Material, das aus Partikeln eines kohlenstoffbeschichteten komplexen Oxids besteht, wobei das komplexe Oxid im Wesentlichen eine Olivinstruktur aufweist und der Formel LiₓM_{1-y}M'_{y}(PO₄)ₙ entspricht, wobei: x, y und n solche Zahlen sind, dass 0 ≤ x ≤ 2, 0 ≤ y ≤ 0,6 und 1 ≤ n ≤ 1,5; M ein Übergangsmetall oder eine Mischung von Übergangsmetallen aus der ersten Reihe des Periodensystems ist; M' ein Element mit fester Valenz ist, das aus Mg²⁺, Ca²⁺, Al³⁺, Zn²⁺ oder einer Kombination daraus ausgewählt ist, und P gegebenenfalls teilweise durch mindestens ein Element ersetzt ist, das aus Si und S ausgewählt ist, wobei das Material als Partikel mit einer Größe von 0,05 bis 30 µm durch Synthese in einer reduzierenden Atmosphäre erhalten wird.

17. Material nach Anspruch 16, **dadurch gekennzeichnet, dass** M mindestens ein Übergangsmetall ist, das aus Mn, Fe, Co und Ni ausgewählt ist.

18. Material nach Anspruch 16, **dadurch gekennzeichnet, dass** es aus kugelförmigen Agglomeraten mit einer Größe zwischen 1 und 30 µm zusammengesetzt ist, wobei die Agglomerate aus kleineren Partikeln zusammengesetzt sind.

19. Material nach Anspruch 16, **dadurch gekennzeichnet, dass** es aus kugelförmigen Agglomeraten mit einer Größe zwischen 1 und 20 µm zusammengesetzt ist, wobei die Agglomerate aus kleineren Partikel bestehen, die durch Kohlenstoff miteinander verbunden sind, wobei der Kohlenstoffgehalt weniger als 7 %, bezogen auf die Masse des komplexen Oxids, beträgt.

20. Material nach Anspruch 16, **dadurch gekennzeichnet, dass** es eine elektronische Leitfähigkeit, gemessen an einer bei einem Druck von 3000 kg.cm⁻² verdichteten Pulverprobe, von mehr als 10⁻⁸ S.cm⁻¹ aufweist.

21. Elektrochemische Zelle, die mindestens zwei Elektroden und mindestens einen Elektrolyt umfasst, **dadurch gekennzeichnet, dass** mindestens eine ihrer Elektroden das Material nach Anspruch 16 umfasst.

## Claims

1. A method for synthesizing particles of a carbon-coated complex oxide, said complex oxide having substantially an olivine structure and conforming to formula LiₓM_{1-y}M'_{y}(PO₄)ₙ, wherein: x, y and n are numbers such that 0 ≤ x ≤ 2, 0 ≤ y ≤ 0.6 and 1 ≤ n ≤ 1.5; M is a transition metal or a mixture of transition metals from the first row of the periodic table; M' is a fixed-valence element selected from Mg²⁺, Ca²⁺, Al³⁺, ZN²⁺ or a combination of the same and P is optionally partially replaced by at least one element selected from Si and S, said method being **characterized in that**:
- the synthesis is made by a thermodynamic or kinetic reaction for balancing a mixture, in required proportions, of the following source compounds:
a) a source of M;
b) a source of M' when y > 0;
c) a source compound of lithium;
d) a source compound of P and optionally a source compound of a Si or S element;
e) a source of conductive carbon;
with a reducing gaseous atmosphere;
- the synthesis is performed by controlling the composition of said gaseous atmosphere, the temperature of the synthesis reaction and the proportion of the source compound c) with respect to other source compounds a), b) and d), to impose the oxydation state of the transition metal to the valence degree desired for constituting the compound of the LiMPO₄ type;
- the temperature of the synthesis is higher than the temperature at which the reactive atmosphere is capable of reducing the transition element(s) to their required oxidation states in the LiMPO₄ compound, the temperature and duration of the synthesis are lower than, respectively, the temperature and duration leading to a reduction of the transition element(s) to the metallic state or an oxidation of the carbon resulting from the pyrolysis of the organic substance;
- the method includes at least a step of pyrolyzing the source compound e).

2. The method according to claim 1, **characterized in that** the particles have a size of 0.05 to 30 µm.

3. The method according to claim 1 or 2, **characterized in that** M is at least a transition metal selected from Mn, Fe, Co and Ni.

4. The method according to claim 1 or 2, **characterized by** using precursors in the form of particles whose size and shape do not differ by more than 80 % from those of the particles of the final compound are used.

5. The method according to claim 1 or 2, **characterized in that** at least a part of said transition metal(s) composing M is found in the source compound a) in an oxidation state higher or lower than that of the metal in the final compound of the LiMPO₄ type.

6. The method according to claim 1 or 2, **characterized in that** the synthesis reaction between source compounds a) to d) is performed simultaneously with the pyrolysis reaction of the source compound e).

7. The method according to claim 1 or 2, **characterized in that** the pyrolysis reaction is performed in a second step, subsequent to the synthesis reaction between compounds a) to d).

8. The method according to claim 1 or 2, **characterized in that** it comprises a heat treatment (that includes reaction of formation of the complex oxide, reduction, pyrolysis and optionally dehydration of one or several sources a) to d)), said heat treatment consisting of a heating from the ambient temperature to a temperature comprised between 500 and 1100°C.

9. The method according to claim 2, **characterized in that** the source of M is also a source of P and/or the source of M' is also a source of P and/or the source of lithium is also a source of P and/or the source of P is also a source of lithium.

10. The method according to claim 2, **characterized in that** M is selected at least in part in the group consisted of iron, manganese, cobalt and nickel, the remainder of the transition metals being selected in the group consisted of vanadium, titanium, chromium and copper.

11. The method according to claim 1 or 2, **characterized in that** the source compound of M is iron III oxide or magnetite, manganese dioxide, di-vanadium pentoxide, trivalent iron phosphate, iron and lithium hydroxyphosphate or trivalent iron nitrate, or a mixture thereof.

12. The method according to claim 1 or 2, **characterized in that** the source compound of lithium is selected in the group consisted of lithium oxide or hydroxide, lithium carbonate, neutral phosphate Li₃PO₄, acid phosphate LiH₂PO₄, lithium ortho-, meta- or polysilicates, lithium sulphate, lithium oxalate and lithium acetate, or a mixture thereof.

13. The method according to claim 1 or 2, **characterized in that** the source of P is selected in the group consisted of phosphoric acid and esters thereof, neutral phosphate Li₃PO₄ or acid phosphate LiH₂PO₄, mono- or di-ammonium phosphates, trivalent iron phosphate, manganese and ammonium phosphate (NH₄MnPO₄), and mixtures thereof.

14. The method according to claim 1 or 2, **characterized in that** the conductive carbon source compound content in the mixture of source compounds is such that the conductive carbon content in the reaction medium is comprised between 0.1 and 25 % of the total mass of the reaction mixture.

15. The method according to claim 1 or 2, for preparing LiFePO₄, **characterized in that** the Fe source compound is an iron III salt.

16. A material consisted of particles of a carbon-coated complex oxide, said complex oxide having substantially an olivine structure and conforming to formula LiₓM_{1-y}M'_{y}(PO₄)ₙ, where: x, y and n are numbers such that 0 ≤ x ≤ 2, 0 ≤ y ≤ 0.6 and 1 ≤ n ≤ 1.5; M is a transition metal or a mixture of transition metals from the first row of the periodic table; M' is a fixed-valence element selected from Mg²⁺, Ca²⁺, Al³⁺, ZN²⁺ or a combination of the same and P is optionally partially replaced by at least one element selected from Si and S, said material being obtained as particles having a size of 0.05 to 30 µm, by synthesis in a reducing atmosphere.

17. The material according to claim 16, **characterized in that** M is at least a transition metal selected from Mn, Fe, Co and Ni.

18. The material according to claim 16, **characterized in that** it is composed of spherical agglomerates of size comprised between 1 and 30 µm, said agglomerates being composed of smaller particles.

19. The material according to claim 16, **characterized in that** it is composed of spherical agglomerates of size comprised between 1 and 20 µm, said agglomerates being composed of smaller particles linked to each other by carbon, the carbon content being lower than 7 % with respect to the mass of complex oxide.

20. The material according to claim 16, **characterized in that** it has an electronic conductivity, measured on a sample of powder compacted at a pressure of 3000 kg.cm⁻², higher than 10⁻⁸ S.cm⁻¹.

21. An electrochemical cell comprising at least two electrodes and at least one electrolyte, **characterized in that** at least one of its electrodes comprises said material according to claim 16.
